# EUROPEAN PATENT APPLICATION

(11) **EP 1 437 652 A2**
(43) Date of publication of application: **14.07.2004**
(21) Application number: 03257448.5
(22) Date of filing: 26.11.2003
(51) Int. Cl.: G06F 9/445

(54) **Image forming apparatus that checks hardware resources before activating hardware-related programs**

(30) Priority: 26.11.2002 JP 2002342826; 25.11.2003 JP 2003393414; 25.11.2003 JP 2003393415; 25.11.2003 JP 2003393416
(71) Applicant: Ricoh Company, Ltd., Tokyo 143-8555 (JP)
(72) Inventor: Kobayashi, Ayako, Tokyo (JP)
(74) Representative: Leeming, John Gerard

(57) **Abstract**

An image forming apparatus is disclosed that includes an examining unit, a configuration unit, and an activating unit. The configuration unit stores a corresponding relation between the examining unit and a hardware-related program. The examining unit examines a hardware resource and determines whether the examined hardware resource satisfies a predetermined condition, before the activating unit activates the hardware-related program. Since the program does not need to examine the hardware resource to determine whether the examined hardware resource satisfies the predetermined condition, the program does not need to have a redundant portion that can be shared with another program in common.

## Description

The present invention generally relates to an image forming apparatus, and more particularly, to an image forming apparatus that activates programs in compliance with a predetermined configuration file, a method of activating programs for the image forming apparatus, and a computer program for activating programs.

A multifunctional peripheral (MFP) is an image forming apparatus that can print computer data as a printer. The MFP also can scan documents as a scanner, duplicate documents as a copier, and exchange facsimile messages via a public channel as a facsimile machine. The MFP also can communicate with computers and exchange e-mail messages via a network. The MFP includes a display unit, a printer unit, and a scanner unit. An operator can easily switch the above functions of the MFP by switching software running in the MFP. Japanese Patent Laid-open Application No. 2002-84383 discloses an example of the MFP.

When the MFP is turned on, a basic input/output system (BIOS) and a boot loader are activated. The boot loader loads a kernel and a root file system in random access memory (RAM), and activates the kernel. The activated kernel mounts the root file system, that is, activates a file system and/or a peripheral unit and sets them accessible.

After the kernel is activated, an application/service layer activation program activates application programs and/or various services. The application/service layer activation program is the first process that is activated in the MFP. It mounts the file system and activates processes of the service layer and processes of the application layer that are necessary for the operation of the MFP in compliance with a predetermined configuration file.

In a conventional MFP, the activated processes of the application layer and/or the service layer checks hardware resources such as the display unit, the printer unit, and the scanner unit of the MFP 2 in their operations. Japanese Patent Laid-open Application No. 2000-20203 discloses an exemplary program that activates application programs in compliance with a predetermined configuration file.

In a conventional MFP, each process needs to check the hardware resources that the processes access in common, and consequently, the processes have redundant portions for checking the hardware resources. Additionally, in the conventional MFP, since the processes check the hardware resources while the processes are running, the processes need to be activated for checking whether the hardware resources are accessible and how high the performances of the hardware resources are.

Accordingly, in the conventional MFP, a process needs to be activated even if it is not usable due to the lack of suitable hardware resources (there is no hardware resource that the process needs to access, or the performance of the accessible hardware resources is too low). The invention disclosed in the above Japanese Patent Laid-open Application is not applicable to this problem because the program does not check the hardware resources.

Additionally, when an SD card is inserted, the application/service layer activation program mounts the file system in accordance with a configuration file stored in the SD card, for example, and activates the process of the application stored in the SD card.

In the case of a conventional MFP, the process of the application stored in the SD card' checks hardware resources (such as a display unit, a printer unit, and an image capture unit), the model of the MFP, and a slot number into which the SD card is inserted.

The SD card may store a plurality of application programs corresponding to different MFP models. Since the processes of the application programs stored in the SD card check the MFP model, for example, the processes may contain redundant portions. Moreover, it is difficult to check the MFP model unless each process is activated because only the activated processes can check the MFP model. Accordingly, in the case of a conventional MFP, the processes of the application program corresponding to other MFP models need to be activated in vain in order to check the MFP model. The technique disclosed in the above Japanese Patent Laid-open Application No. 2000-20203 does not check the MFP model corresponding to an application to be activated, and as a result, does not solve this problem.

The SD card may contain an identification number of a slot into which the SD card is to be inserted. Conventionally, because the processes of applications programs stored in the SD card check the identification number of the slot into which the SD card is inserted, the processes need to redundantly contain the same portion. Additionally, the processes need to be activated in vain just to check the identification number of the slot into which the SD card is inserted because only the activated processes can check the identification number. Accordingly, even if the SD card is inserted into a slot other than the slot into which the SD card is to be inserted, the processes need to be activated just to check the identification number of the slot.

It is a general object of the present invention to provide a novel and useful image forming apparatus in which one or more of the above problems are eliminated.

Another and more specific object of the present invention is to provide an image forming apparatus in which the redundant portion of the programs can be reduced, and programs that access the hardware resources can be efficiently activated.

Yet another specific object of the present invention is to provide an image forming apparatus in which the redundant portion of the programs stored in a removable recording medium can be reduced, and programs stored in the removable recording medium can be activated efficiently, a method of activating the programs, and a program for activating the programs.

To achieve one or more of the above objects, an image forming apparatus includes: a hardware resource; a program; an examining unit that examines said hardware resource; a configuration unit in which the relation between said examining unit and said program is configured; and an activating unit that activates said program having the relation with said examining unit based on the examination of said hardware resource.

The configuration unit stores a corresponding relation between the examining unit and the program. The examining unit examines the hardware resource and determines whether the examined hardware resource satisfies a predetermined condition, for example, before the activating unit activates the program corresponding to the examining unit. Since the program does not need to examine the hardware resource and determine whether the examined hardware resource satisfies the predetermined condition, the program does not need to have a redundant portion that can be shared with another program in common. Additionally, the image forming apparatus does not activate the program if the program does not fit the hardware resource. The image forming apparatus can efficiently activates only programs that fit the hardware resource the image forming apparatus has.

According to another aspect of the present invention, an image forming apparatus includes: a hardware resource; a program; a configuration unit in which the relation between examining processing and said program is configured; and an activating unit that performs the examining processing and activates said program having the relation with the examining processing based on the result of the examining processing.

The activating unit may have the same function as the examining unit. The activating unit examines the hardware resource and determines whether the examined hardware resource satisfies a predetermined condition, for example, before activating the program corresponding to the examining unit. Since the program does not need to examine the hardware resource and determine whether the examined hardware resource satisfies the predetermined condition, the program does not need to have a redundant portion that can be shared with another program in common. Additionally, the image forming apparatus does not activate the program if the program does not fit the hardware resource. The image forming apparatus can efficiently activate only programs that fit the hardware resource the image forming apparatus has.

According to yet another aspect of the present invention, an image forming apparatus includes: a hardware resource; a slot that accepts a recording medium in which a program to be mounted and activated is stored; and an activating unit that compares first machine information indicating an apparatus model corresponding to said program with second machine information indicating the apparatus model of the image forming apparatus, and if the first machine information and the second machine information match, activates the program stored in the recording medium.

Additionally or alternatively, an image forming apparatus may include: a hardware resource; a slot that accepts a recording medium in which a program to be mounted and activated is stored; and an activating unit that compares first identification information of a slot into which the recording medium is to be inserted and second identification information of a slot into which the recording medium is actually inserted, and activates the program stored in the recording medium if said activating unit determines that the first identification information and the second identification information match.

Before activating a program stored in a recording medium, the activating unit determines whether the first machine information of an apparatus model for which the program is designed matches the apparatus model of the image forming apparatus in which the recording medium is set or whether the first identification information of a slot designated in the program stored in the recording medium matches the slot into which the recording medium is inserted. The activating unit activates the program only if the first machine information and the second machine information match or the first identification information and the second identification information match. Accordingly, the program does not need to check whether the program fits the apparatus model or whether the recording medium is inserted in a right slot, and the program does not need to have a redundant portion that can be shared with other programs in common. Additionally, the activating unit does not activate the program stored in the recording medium if the program does not fit the apparatus model. The activating unit can efficiently activate only programs that fit the apparatus model of the image forming apparatus.

Other objects, features, and advantages of the present invention will become more apparent from the following detailed description when read in conjunction with the accompanying drawings.

### BRIEF DESCRIPTION OF THE DRAWINGS

FIG. 1 is a configuration diagram showing the software structure of an MFP according to an embodiment;
FIG. 2 is a configuration diagram showing the hardware structure of the MFP according to the embodiment;
FIG. 3 is a schematic diagram showing the structure of an MFP activation unit according to an embodiment;
FIG. 4 is a flowchart showing processing of an MFP activation unit according to an embodiment;
FIG. 5 is a flowchart showing processing of a program activation unit according to an embodiment;
FIG. 6 is a configuration file according to an embodiment;
FIG. 7 is a flowchart showing processing of a check program "fcucheck" according to the embodiment;
FIG. 8 is a flowchart showing processing of a check program "cpucheck1" according to the embodiment;
FIG. 9 is a flowchart showing processing of a check program "cpucheck2" according to the embodiment;
FIG. 10 is a flowchart showing processing of a check program "memcheck1" according to the embodiment;
FIG. 11 is a flowchart showing processing of a check program "memcheck2" according to the embodiment;
FIG. 12 is a schematic diagram showing another configuration file according to an embodiment;
FIG. 13 is a flowchart showing processing of a check program "hddnonexist" according to an embodiment;
FIG. 14 is a schematic diagram showing another configuration file according to an embodiment;
FIG. 15 is a schematic diagram showing files stored in an SD card according to an embodiment;
FIG. 16 is a flowchart showing processing of a check program "sdcommand" according to an embodiment;
FIG. 17 is a relation diagram among main programs, check programs, the program activation unit 52, the OS, and hardware resources according to an embodiment;
FIG. 18 is another relation diagram in which the check program and the main programs have a 1-to-n relation according to an embodiment;
FIG. 19 is a schematic diagram showing another configuration file according to an embodiment;
FIG. 20 is a schematic diagram showing a configuration file that prevents a directory from being mounted according to an embodiment;
FIG. 21 is another relation diagram in which the check programs and the main program have an n-to-1 relation according to an embodiment;
FIG. 22 is a schematic diagram showing another configuration file according to an embodiment;
FIG. 23 is a first portion of a flowchart showing processing of the program activation unit and the check program according to an embodiment;
FIG. 24 is a second portion of the flowchart shown in FIG. 23;
FIG. 25 is a flowchart showing processing of an MFP activation unit according to an embodiment;
FIG. 26 is a flowchart showing processing of a program activation unit according to an embodiment;
FIG. 27 is a configuration file according to an embodiment;
FIG. 28 is a flowchart showing check processing "fcucheck" according to an embodiment;
FIG. 29 is a flowchart showing check processing "cpucheck1" according to an embodiment;
FIG. 30 is a flowchart showing check processing "cpucheck2" according to an embodiment;
FIG. 31 is a flowchart showing check processing "memcheck1" according to an embodiment;
FIG. 32 is a flowchart showing check processing "memcheck2" according to an embodiment;
FIG. 33 is another configuration file according to an embodiment;
FIG. 34 is a flowchart showing check processing "hddnonexist" according to an embodiment;
FIG. 35 is yet another configuration file according to an embodiment;
FIG. 36 is an imaginary schematic diagram showing an SD card in which files are stored according to an embodiment;
FIG. 37 is a flowchart showing check processing "sdcommand" according to an embodiment;
FIG. 38 is a relation diagram among the main programs, the check processings, the program activation unit 52, the OS, and the hardware resources according to an embodiment;
FIG. 39 is another relation diagram in which the check processing and the main programs have a 1-to-n relation according to an embodiment;
FIG. 40 is yet another configuration file according to an embodiment;
FIG. 41 is yet another configuration file that prevents a directory from being mounted according to an embodiment;
FIG. 42 is another relation diagram in which the check processings and the main program have an n-to-1 relation according to an embodiment;
FIG. 43 is yet another configuration file according to an embodiment;
FIG. 44 is a first portion of a flowchart showing check processing performed by the program activation unit according to an embodiment;
FIG. 45 is a second portion of the flowchart showing check processing performed by the program activation unit according to an embodiment;
FIG. 46 is a flowchart showing processing of an MFP activation unit according to an embodiment;
FIG. 47 is a schematic diagram showing a portion of an MFP according to an embodiment;
FIG. 48 is a flowchart showing processing for activating a program stored in an SD card;
FIG. 49 is another configuration file according to an embodiment;
FIG. 50A through 50C are module information files according to an embodiment;
FIG. 51 is a schematic diagram for explaining steps S215 through S217 shown in FIG. 48;
FIG. 52 is another flowchart showing processing for activating a program stored in an SD card according to an embodiment;
Fig. 53 is yet another configuration file; and
FIG. 54 is an image diagram showing files stored in an SD card.

### DETAILED DESCRIPTION OF THE PREFERRED EMBODIMENTS

A description of the preferred embodiments of the present invention is given below with reference to the drawings.

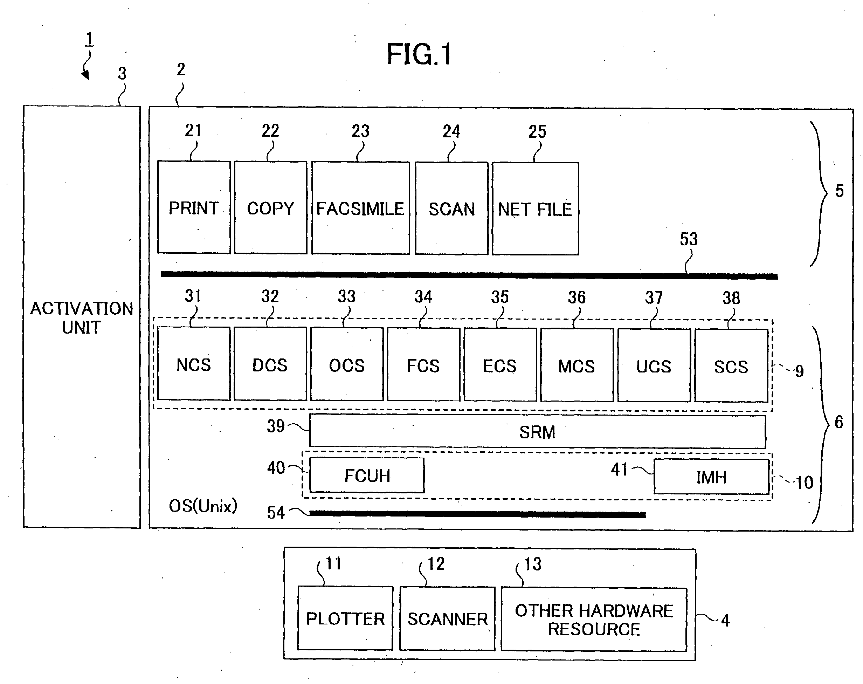

FIG. 1 illustrates the software structure of a multifunctional peripheral (MFP) according to an embodiment. The MFP 1 includes software 2, an MFP activation unit 3, and hardware resources 4.

The hardware resources 4 include a plotter 11, a scanner 12, and other hardware resources 13 such as a facsimile unit, for example. The software 2 includes an application layer 5 and a platform 6 that are executed on an operating system (OS) such as UNIX (registered trade mark).

The application layer 5 includes programs each dedicated for a specific user service related to image forming such as printing, copying, facsimile, and scanning. The application layer 5 of FIG. 1 includes a printer application 21, a copy application 22, a facsimile application 23, a scanner application 24, an a net file application 25. The net file application 25 causes the MFP 1 to function as a file server, and manages data exchange between the MFP 1 and other devices connected to the MFP 1 via a network.

The platform 6 includes a control service layer 9, a system resource manager (SRM) 39, and a handler layer 10. The control service layer 9 interprets requests for processing issued by the application layer 5, and issues requests for reserving the hardware resources 4. The SRM 39 manages the hardware resources 4 and arbitrates requests for reserving the hardware resources 4 issued by the control service layer 9. The handler layer 10 controls the hardware resources 4 in response to the requests for reserving the hardware resources 4 issued by the SRM 39.

The control service layer 9 includes a plurality of service modules such as NCS 31, DCS 32, OCS 33, FCS 34, ECS 35, MCS 36, UCS 37, and SCS 38. The platform 6 supports an API 53 through which the application layer 5 can use the platform 6 by calling predefined functions. The programs of the application layer 5 and the programs of the platform 6 are executed as processes on the OS.

The process of the NCS (network control service) 31 distributes, as a mediator, data received from other resources via the network to the applications, and transmits, as a mediator, data received from the applications to other resources via the network. The NCS 31 manages data exchange between the MFP 1 and another apparatus connected to the MFP 1 via the network.

The process of the DCS (delivery control service) 32 delivers document data stored in the MFP 1. The process of the OCS (operations panel control service) 33 controls an operations panel, of which description is given below.

The process of the FCS (facsimile control service) 34 transmits/receives facsimile messages created by the application layer 5 via the PSTN and/or the ISDN, registers/retrieves facsimile messages stored in a backup memory, and reads/prints facsimile messages.

The process of ECS (engine control service) 35 controls engines such as the plotter 11, the scanner 12, and the other hardware resources 13. The process of the MCS (memory control service) 36 reserves/discharges memory regions, controls a HDD, and compresses/decompresses image data. The process of the UCS (user information control service) 37 manages user information.

The process of the SCS (system control service) 38 controls the operations unit, displays system screens, controls LEDs, the hardware resources, the applications, and further manages interruptions of the applications.

The process of the SRM 39 controls system and manages the hardware resources 4 together with the SCS 38. The process of the SRM 39, for example, arbitrates requests for reserving the hardware resources 4 such as the plotter 11 and the scanner 12 issued by an upper rank layer, and controls the operations of the hardware resources 4.

Specifically, the process of the SRM 39 determines whether a hardware resource 4 that is requested to be reserved by an application is not occupied (usable) by another application, for example. If the requested hardware resource 4 is usable, the process of the SRM 39 informs the requesting application that the hardware resource 4 is usable. The process of the SRM 39 schedules the use of the hardware resource 4 in response to receipt of requests for reserving the hardware resources 4 issued by the upper rank layer, and causes the hardware resources 4 to operate as requested. For example, the process of the SRM 39 causes a printer engine to transport paper and form an image on the paper. The process of the SRM 39 reserves a memory region and creates a file, for example.

The handler layer 10 includes a facsimile control unit handler (FCUH) 40 that controls a facsimile control unit (FCU) (described below) and an image memory handler (IMH) 41 that allocates memory regions to processes and manages the allocated memory regions. The SRM 39 and the FCUH 40 request the hardware resources 4 to operate by issuing functions predefined as an engine interface (I/F) 54.

According to the structure shown in FIG. 1, the platform 6 of the MFP 1 can monistically provide the applications with services that are commonly used by the applications. The hardware structure of the MFP 1 is described below.

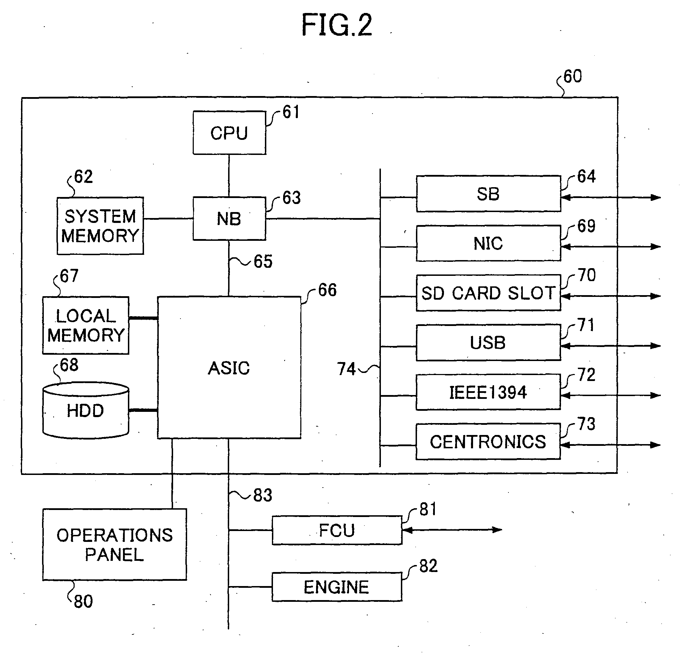

FIG. 2 shows the hardware structure of the MFP 1 according to an embodiment of the present invention. The MFP 1 includes a controller 60, an operations panel 80, the FCU 81, and an engine unit 82.

The controller 60 includes a CPU 61, a system memory 62, a NB 63, a SB 64,an ASIC 66, a local memory 67, an HDD 68, a NIC 69, an SD card slot 70, a USB I/F 71, an IEEE 1394 I/F 72, and a Centronics I/F 73.

The operations panel 80 is connected to the ASIC 66 of the controller 60. The FCU 81 and the engine unit 82 are connected to the ASIC 66 of the controller 60 via a PCI bus 83.

The local memory 67 and the HDD 68 are connected to the ASIC 66. The CPU 61 and the ASIC 66 are connected to each other via the NB 63 (a CPU chip set). The ASIC 66 and the NB 63 are connected to each other via an AGP (accelerated graphics port) 65.

The CPU 61 controls the entire system of the MFP 1. The CPU 61 activates the plurality of service modules 31 through 38 (the control service layer 9), the SRM 39, and the FCUH 40 and IMH 41 (the handler layer 10, and then, activates the printer application 21, the copy application 22, the facsimile application 23, the scanner application 24, and the net file application 25 (the application layer 5).

The NB (north bridge) 63 is a bridge that connects the CPU 61, the system memory 62, the SB 64, and the ASIC 66, the NIC 69, the SD card slot 70, the USB I/F 71, the IEEE 1394 I/F 72, and the Centronics I/F 73 to one another. The NB 63 is connected to the SB 64, the NIC 69, the SD card slot 70, the USB I/F 71, the IEEE 1394 I/F 72, and the Centronics I/F 73 via the PCI bus 74. The SB (south bridge) 64 is a bridge that connects ROM and peripheral devices to the PCI bus 74.

The system memory 62 is memory used for image forming. The local memory 67 is used as an image buffer for copying a document and a code buffer. The ASIC 66 is an application specific integrated circuit designed for various hardware elements used for image forming. The HDD 68 is a storage device in which image data, document data, programs, font data, and forms, for example, are stored.

The NIC (network interface card) 69 connects the MFP 1 to the network such as the Internet and a LAN. The SD card slot 70 is an adaptor to which an SD card is inserted. The SD card slot 70 issues an interrupt to its device driver in response to the insertion or the removal of the SD card.

The USB I/F 71, the IEEE 1394 I/F 72, and the Centronics I/F 73 are interfaces supporting corresponding standards. The operations panel 80 is an operations unit that receives inputs from an operator and displays information to the operator. The FCU 81 includes a battery-backed up memory unit in which facsimile messages received while the MFP 1 is turned off are temporally stored.

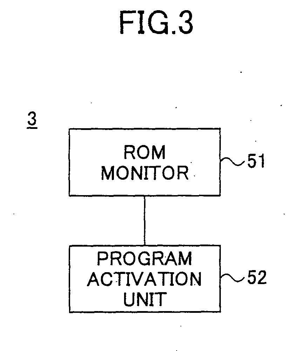

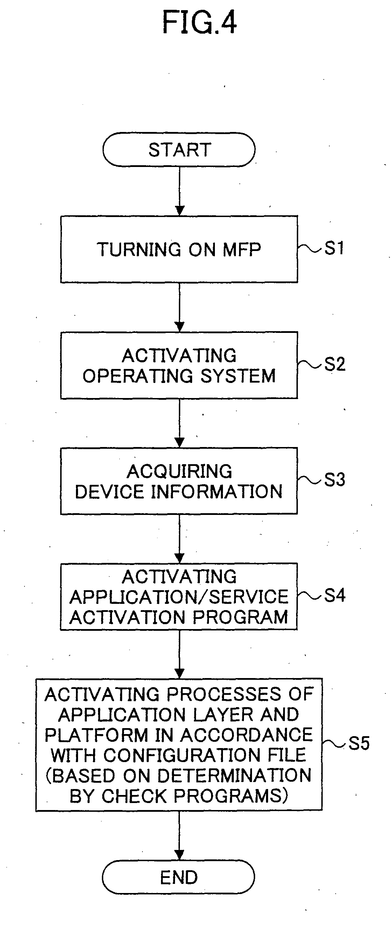

FIG. 3 shows the structure of the MFP activation unit according to an embodiment. When the MFP 1 is turned on, the MFP activation unit 3 is first activated. Then, the MFP activation unit 3 activates the application layer 5 and the platform 6. The MFP activation unit 3 includes a ROM monitor 51 and a program activation unit 52. Processing of the MFP activation unit 3 is described with reference to a flowchart of FIG. 4.

### [FIRST EMBODIMENT]

FIG. 4 is a flowchart for explaining the operation of the MFP activation unit. In step S1, when the MFP 1 is turned on, the BIOS and the ROM monitor 51 (boot loader) are executed. The ROM monitor 51 initializes the hardware of the MFP 1, diagnoses the controller 60, and initializes the software of the MFP 1, for example. In step S2 after step S1, the ROM monitor 51 loads the OS and the root file system in the system memory 62 and activates them. The OS mounts the root file system.

In step S3 after step S2, the OS acquires, as soon as it is activated, information about devices connected to the controller 60. The information includes the clock frequency of the CPU 61, the memory size of the system memory 62 and the local memory 57, and the board type of the controller 60, for example.

In step S4 after step S3, the OS activates the program activation unit 52 (application/service activation program). The program activation unit 52 reserves memory regions in the system memory 62 and the local memory 67. The program activation unit 52 is the first process that is activated in the MFP 1. In step S5 after step S4, the program activation unit 52 mounts the file system in compliance with a configuration file.

The program activation unit 52 activates a check program in compliance with the configuration file of the program activation unit 52. The program activation unit 52 determines whether the check program is completed, and in accordance with the determination, further determines whether the program activation unit 52 should activate a program (hereinafter referred to a "main program") of the application layer 5 and/or the platform 6.

When the program activation unit 52 determines that it should activate the main program, the program activation unit 52 reads the main program from the ROM, for example, in accordance with the configuration file, and loads the read main program in the memory regions reserved in the system memory 62 and the local memory 67. Then, the program activation unit 52 activates the main program. Processing of the program activation unit 52 in step S5 is described in further detail.

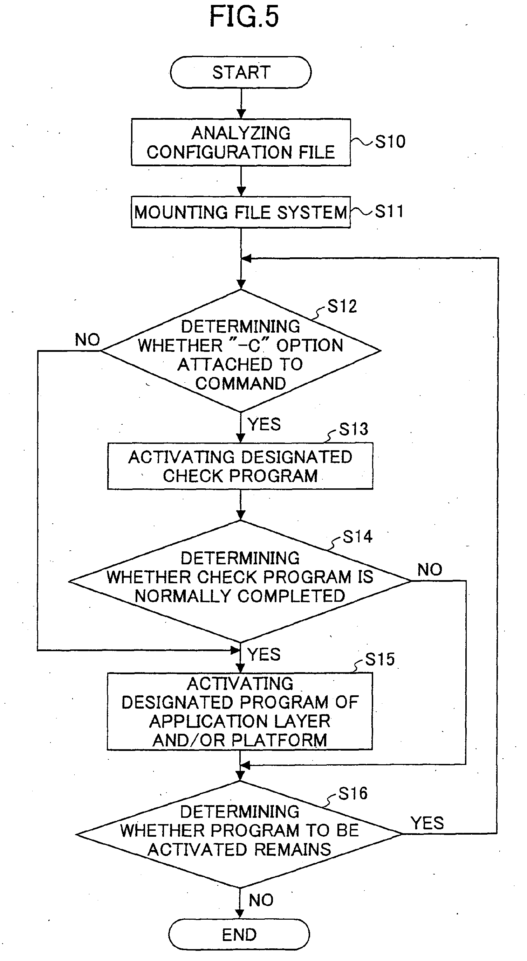

FIG. 5 is a flowchart showing processing of the program activation unit 52. In step S10, the program activation unit 52 interprets the configuration file. In step S11 after step S10, the program activation unit 52 mounts the file system in compliance with the configuration file.

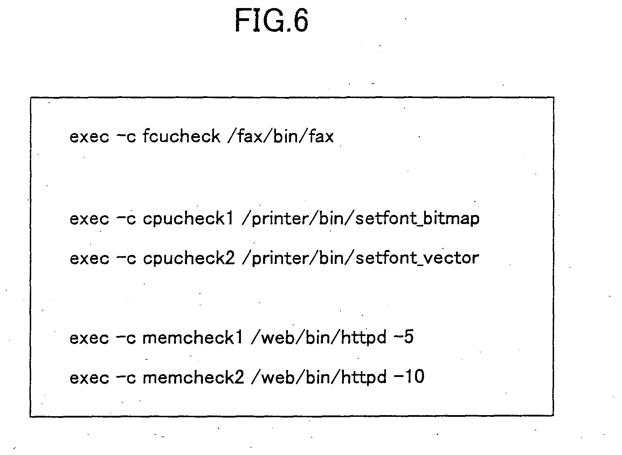

In step S12 after step S11, the program activation unit 52 reads an "exec" command written in the configuration file, and determines whether the "exec" command has a "-c" option therein. FIG. 6 shows an exemplary configuration file. In this case, the program activation unit 52 determines that the "exec" command in the first line has a "-c" option. If the program activation unit 52 determines that there is a "-c" option in the "exec" command (YES in step S12), in step S13, the program activation unit 52 activates the check program designated by the "-c" option. In the case of the configuration file shown in FIG. 6, the program activation unit 52 activates a check program "fcucheck" designated in the "exec" command in the first line.

The activated check program checks the hardware resources (whether a specific hardware resource exists, and whether the existing hardware resource satisfies a predetermined performance' requirement, for example), and informs the program activation unit 52 of the result of the check.

In step S14 after step S13, the program activation unit 52 determines whether the check program has been normally completed based on the result of the check reported by the check program. If the program activation unit 52 determines that the check program has been normally completed (YES in step S14), the process proceeds to step S15. In step S15, the program activation unit 52 activates the main program designated in the "exec" command. For example, in the case of the configuration file shown in FIG. 6, the program activation unit 52 activates the main program "/fax/bin/fax" designated in the "exec" command in the first line.

In step S16 after step S15, the program activation unit 52 determines whether there remains any main program that is to be activated, that is, whether there is any "exec" command that remains unread in the configuration file. If the program activation unit 52 determines that there is an unread "exec" command (YES in step S16), the program activation unit 52 returns to step S12, and reads the unread "exec" command from the configuration file. Steps after step S12 are then executed again.

On the other hand, if the program activation unit 52 determines that no unread "exec" command remains in the configuration file (NO in step S16), processing of the program activation unit 52 ends. In addition, if the program activation unit 52 determines that an "exec" command has no "-c" option (No in step S12), the process proceeds to step S15. The program activation unit 52 activates the main program designated in the "exec" command. If an "exec" command is accompanied by a "-c" option, the program activation unit 52 always activates the main program that is designated in the "exec" command.

In step S14, if the program activation unit 52 determines that the check program has not completed normally (NO in step S14), the process proceeds to step S16. If the execution of the check program ended abnormally, the program activation unit 52 does not activate the main program designated in the "exec" command.

As described above with reference to the flowchart shown in FIG. 5, the program activation unit 52, if the execution of the check program ended normally, activates the main program designated in the "exec" command, and if the execution of the check program ended abnormally, does not activates the main program designated in the "exec" command.

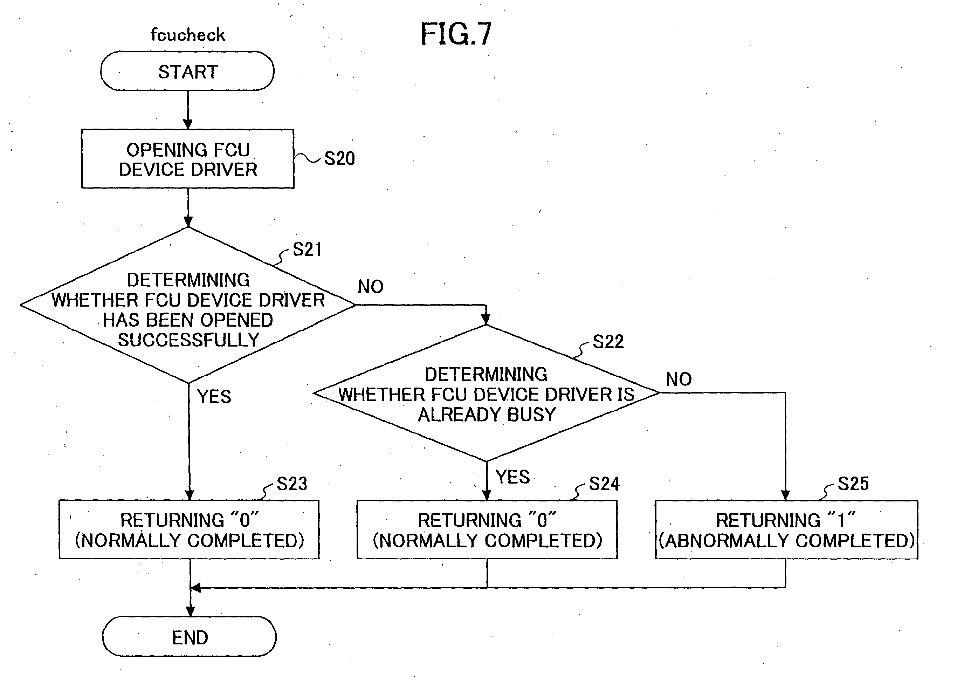

A description of processing of a plurality of check programs included in the configuration file shown in FIG. 6 is given below. Since the "exec" command in the first line of the configuration file shown in FIG. 6 includes a "-c" option, the check program "fcucheck" is activated. The check program "fcucheck" activated by the program activation unit 52 performs, for example, processing shown in FIG. 7.

FIG. 7 is a flowchart showing exemplary processing of the check program "fcucheck". In step S20, the check program opens the device driver of the FCU 81. In step S21 after step S20, the check program determines whether the opening of the device driver is successful.

If the check program determines that the opening of the device driver is successful (YES in step S21), the process proceeds to step S23. The check program determines that the FCU 81 is connected to the MFP 1, and sends a value "0" indicating the successful opening to the program activation unit 52. If the check program determines that that the opening of the device driver is unsuccessful (NO in step S21), the process proceeds to step S22. The check program determines whether the device driver of the FCU 81 has been opened and consequently busy. The check program determines whether the FCU 81 is busy by determining whether "errno" contains "EBUSY".

If the check program determines that the FCU 81 is already opened and busy (YES in step S22), the process proceeds to step S24. The check program determines that the FCU 81 is connected to the MFP 1, and the check program sends a value "0" indicating its successful completion to the program activation unit 52. However, if the check program does not determine that the FCU 81 has been opened and busy (NO in step S22), the process proceeds to step S25. The check program determines that the FCU 81 is not connected to the MFP 1, and sends a value "1" indicating its abnormal completion to the program activation unit 52.

According to processing described in the flowchart shown in FIG. 7, if the FCU 81 is connected to the MFP 1, the check program informs the program activation unit 52 of its normal ending. If the FCU 81 is not connected to the MFP 1, the check program informs the program activation unit 52 of its abnormal ending. In response to receipt of information about the check program's normal ending, the program activation unit 52 activates the application "fax". However, the program activation unit 52, in response to receipt of information about the check program's abnormal ending, does not activate the application "fax".

According to the above arrangement, using the information indicating normal ending or abnormal ending of the check program, the program activation unit 52, if the FCU 81 is connected to the MFP 1, can activate the application "fax", and if the FCU 81 is not connected to the MFP 1, can avoid activating the application "fax". In other words, the program activation unit 52 can control the activation of the FCU 81 based on the determination of whether the FCU 81 is connected to the MFP 1. Processing of the check program is described using the FCU 81 as an example of the hardware resource with reference to the flowchart shown in FIG. 7. The hardware resource is not limited to the FCU 81. The hardware resource may be an optional board, for example, to be connected to the MFP 1. According to the flowchart shown in FIG. 7, the MFP 1 can control the activation of the programs of the application layer and/or platform based on the information of whether the optional board, for example, is connected thereto.

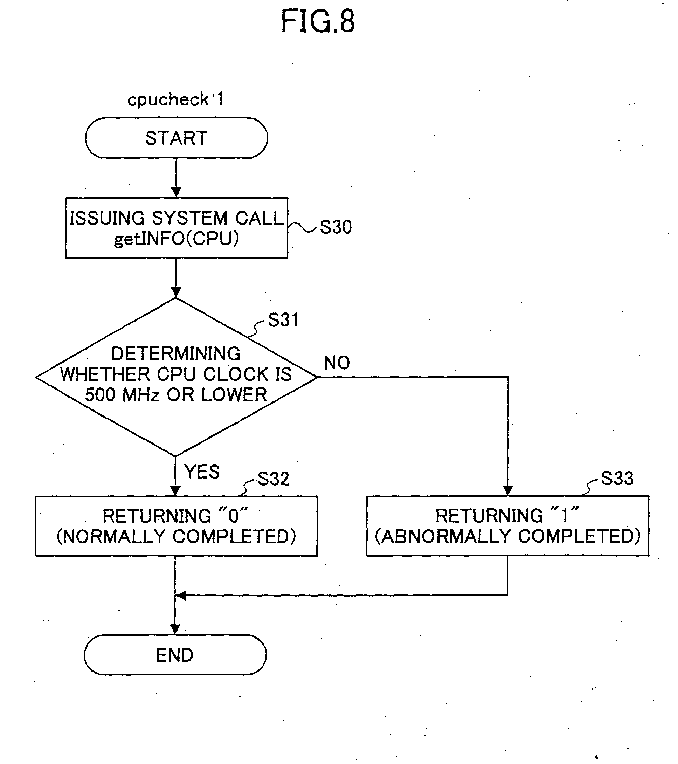

Referring to the configuration file shown in FIG. 6, when processing of the "exec" command in the first line is completed, the "exec" command in the second line is executed. Because the "exec" command in the second line includes a "-c" option, another check program "cpucheck1" is activated. Processing of the check program "cpucheck1" is shown, for example, in the flowchart of FIG. 8.

FIG. 8 shows a flowchart of exemplary processing of the check program "cpucheck1". In step S30, the check program issues a system call "getINFO(CPU)", and acquires the clock frequency included in device information of the CPU 61.

In step S31 after step S30, the check program determines whether the clock frequency of the CPU 61 acquired in step S30 is 500 MHz or less. If the check program determines that the clock frequency is 500 MHz or less (YES in step S31), the process proceeds to step S32, and the check program sends a value "0" indicating the normal ending of the check program to the program activation unit 52. If the check program determines that the clock frequency is not 500 MHz or less (NO in step S31), the process proceeds to step S33, and the check program sends a value "1" indicating the abnormal ending of the check program to the program activation unit 52.

According to processing shown in the flowchart of FIG. 8, if the clock frequency of the CPU 61 is 500 MHz or less, the check program informs the program activation unit 52 that the check program has normally ended, and if the clock frequency of the CPU 61 is not 500 MHz or less, the check program informs the program activation unit 52 that the check program has abnormally ended. In response to receipt of the information that the check program has normally ended, the program activation unit 52 activates an application "setfont_bitmap" designated in the "exec" command, but in response to receipt of the information that the check program has abnormally ended, the program activation unit 52 avoid activating the application "setfont_bitmap".

According to the above arrangement, using the information sent from the check program as to whether the check program has ended normally, the program activation unit sets the bitmap font as the default font of the printer. Accordingly, even if the clock frequency of the CPU 61 is 500 MHz or less, the program activation unit 52 can cause the MFP 1 to print data at high speed using the bit map font as the default font.

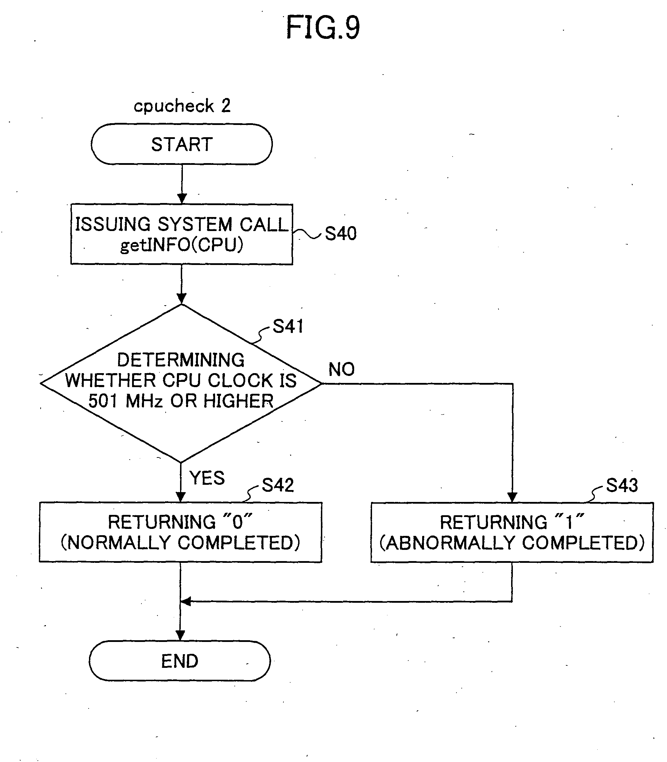

Referring to the configuration file shown in FIG. 6, after executing the "exec" command in the second line, the program activation unit executes the "exec" command in the third line. Since the "exec" command in the third line includes the "-c" option, a check program "cpucheck2" is activated. The check program "cpucheck2" activated by the program activation unit 52 performs, for example, processing as shown in FIG. 9.

FIG. 9 shows an exemplary flowchart showing processing of the check program "cpucheck2". In step S40, the check program issues a system call "getINFO(CPU)", and acquires the clock frequency included in device information of the CPU 61 from the OS.

In step S41 after step S40, the check program determines whether the clock frequency of the CPU 61 acquired in step S40 is 501 MHz or higher. If the check program determines that the clock frequency is 501 MHz or higher (YES in step S41), the process proceeds to step S42, and the check program sends a value "0" indicating the normal ending of the check program to the program activation unit 52. If the check program determines that the clock frequency is not 501 MHz or higher (NO in step S41), the process proceeds to step S43, and the check program sends a value "1" indicating the abnormal ending of the check program to the program activation unit 52.

According to processing shown in the flowchart of FIG. 9, if the clock frequency of the CPU 61 is 501 MHz or higher, the check program informs the program activation unit 52 that the check program has normally ended, and if the clock frequency of the CPU 61 is not 501 MHz or higher, the check program informs the program activation unit 52 that the check program has abnormally ended. In response to receipt of the information that the check program has normally ended, the program activation unit 52 activates an application "setfont_vector" designated in the "exec" command, but in response to receipt of the information that the check program has abnormally ended, the program activation unit 52 avoid activating the application "setfont_vector".

According to the above arrangement, using the information sent from the check program as to whether the check program has ended normally, the program activation unit 52 sets the vector font as the default font of the printer. Accordingly, if the clock frequency of the CPU 61 is 501 MHz or higher, the program activation unit 52 can cause the MFP 1 to print high quality fine images using the vector font as the default font.

According to the flowcharts shown in FIGs. 8 and 9, the MFP 1 according to an embodiment of the present invention can print data using, when the CPU 61 is provided with a higher clock frequency, the vector fonts so as to output images of high quality and, when the CPU 61 is provided with a lower clock frequency, the bit map fonts so as to accelerate the outputting of images.

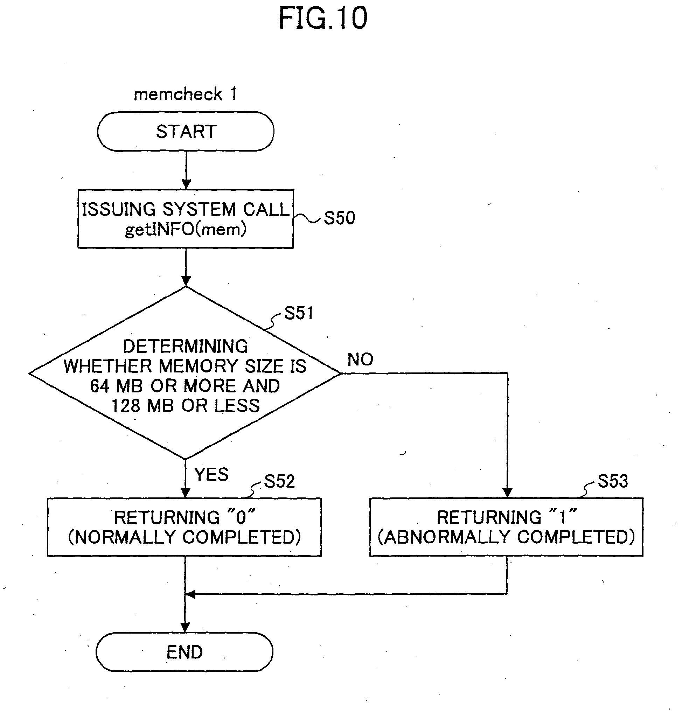

When the "exec" command in the third line is executed, the next "exec" command in the fourth line is executed. Since the fourth "exec" command in the configuration file shown in FIG. 6 is accompanied by the "-c" option, a check program "memcheck1" is activated. The check program "memcheck1" activated by the program activation unit 52 performs, for example, processing shown in FIG. 10.

FIG. 10 shows exemplary processing of the check program "memcheck1". In step S50, the check program issues a system call "getINFO(mem)", and acquires information about the memory size (combined memory size) of the system memory 62 and the local memory 67 stored in the device information from the OS. In step S51 after step S50, the check program determines whether the memory size acquired in step S50 is 64 MB or more and 128 MB or less.

If a determination is made that the memory size is 64 MB or more and 128 MB or less (YES in step S51), the process proceeds to step S52, and the check program sends a value "0" indicating its normal ending to the program activation unit 52. If a determination is made that the memory size is not 64 MB or more and 128 MB or less (NO in step S51), the process proceeds to step S53, and the check program sends a value "1" indicating its abnormal ending to the program activation unit 52.

According to processing shown in the flowchart of FIG. 10, the check program can inform the program activation unit 52 that, if the memory size is 64 MB or more and 128 MB or less, the check program has ended normally, and if the memory size is not 64 MB or more and 128 MB or less, the check program has ended abnormally. In response to receipt of information from the check program that the check program has ended normally, the program activation unit 52 activates five http daemons (hereinafter referred to as "httpd") and, in response to receipt of information from the check program that the check program has ended abnormally, the program activation unit 52 does not activate the httpds.

According to the above arrangement, the program activation unit 52 can determine the number of activated daemons depending on the information from the check program as to whether it has ended normally. If the memory size of the system memory 62 and the local memory 67 is small, the program activation unit 52 can reduce the number of activated daemons so as to save memory.

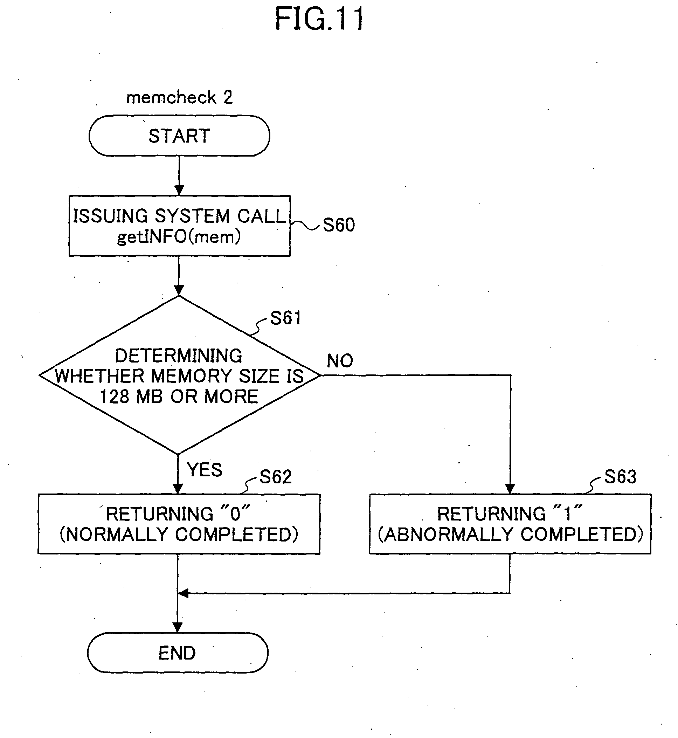

After the fourth "exec" command of the configuration file shown in FIG. 6 is executed, the "exec" command in the fifth line is executed. Because the fifth "exec" command is accompanied by a "-c" option, a check program "memcheck2" is activated. The check program "memcheck2" performs processing shown in FIG. 11, for example.

FIG. 11 shows exemplary processing of the check program "memcheck2". In step S60, the check program issues a system call "getINFO(mem)", and acquires information about the memory size of the system memory 62 and the local memory 67 stored in the device information from the OS. In step S61 after step S60, the check program determines whether the memory size acquired in step S60 is 128 MB or more.

If a determination is made that the memory size is 128 MB or more (YES in step S61), the process proceeds to step S62, and the check program sends a value "0" indicating its normal ending to the program activation unit 52. If a determination is made that the memory size is not 128 MB or more (NO in step S61), the process proceeds to step S63, and the check program sends a value "1" indicating its abnormal ending to the program activation unit 52.

According to processing shown in the flowchart of FIG. 11, the check program can inform the program activation unit 52 that, if the memory size is 128 MB or more, the check program has ended normally, and if the memory size is not 128 MB or more, the check program has ended abnormally. In response to receipt of information from the check program that the check program has ended normally, the program activation unit 52 activates ten httpds and, in response to receipt of information from the check program that the check program has ended abnormally, the program activation unit 52 does not activate the httpds.

According to the above arrangement, the program activation unit 52 can determine the number of activated daemons depending on the information from the check program as to whether it has ended normally. If the memory size of the system memory 62 and the local memory 67 is large, the program activation unit 52 can increase the number of activated daemons so as to improve the response of the MFP 1 to requests from clients.

According to processing shown in the flowcharts.of FIGs. 10 and 11, the MFP 1 according to an embodiment of the present invention can determine the number of httpds depending on the memory size of the system memory 62 and the local memory 67.

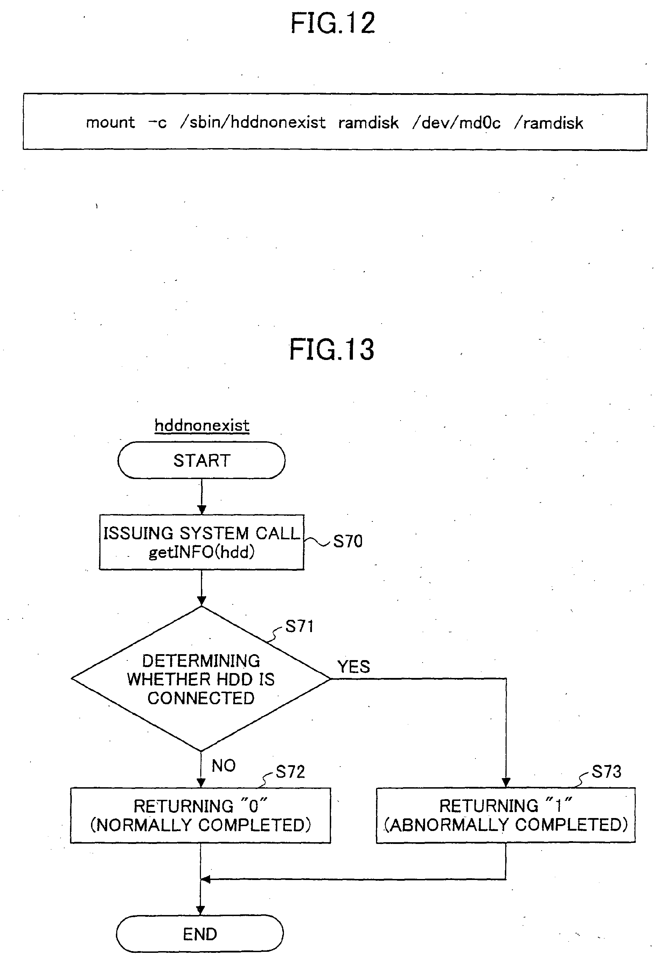

Referring to another configuration file shown in FIG. 12, a description of a check program is given below. The configuration file includes a "mount" command accompanied with a "-c" option. Accordingly, When the "mount" command is executed, a check program "hddnonexist" is activated first. The check program, when activated by the program activation unit 52, performs processing shown in FIG. 13, for example.

FIG. 13 is a flowchart showing exemplary processing of the check program "hddnonexist". In step S70, the check program issues a system call "getINFO(hdd)", and acquires information as to whether a HDD is connected (stored in the device information) from the OS.

In step S71 after step S70, the check program determines whether the HDD is connected to the MFP 1 based on the information acquired in step S70. If a determination is made that no HDD is connected to the MFP 1 (NO in step S71), the process proceeds to step S72, and the check program sends a value "0" indicating that the check has ended normally to the program activation unit 52. On the other hand, if a determination is made that a HDD is connected to the MFP 1 (YES in step S71), the process proceeds to step S72, and the check program sends a value "1" indicating that the check program has ended abnormally to the program activation unit 52.

According to processing shown in the flowchart of FIG. 13, if no HDD is connected to the MFP 1, the check program can inform the program activation unit 52 of its normal ending. If a HDD is connected to the MFP 1, the check program can inform the program activation unit 52 of its abnormal ending. In response to receipt of the value indicating normal ending from the check program, the program activation unit 52 mounts a ramdisk. Specifically, "/dev/md0c" is mounted to the mount point "/ramdisk". In response to receipt of the value indicating abnormal ending, the program activation unit 52 does not mount the ramdisk.

According to the above arrangement, using the information from the check program, the program activation unit 52, when no HDD is connected, mounts the ramdisk and, when a HDD is connected, does not mount the ramdisk. That is, even if no HDD is provided to the MFP 1, the MFP 1 can use the ramdisk as a local storage device for PDL storage. If a HDD is connected to the MFP 1, the MFP 1 can use the HDD as a local storage device for PDL storage.

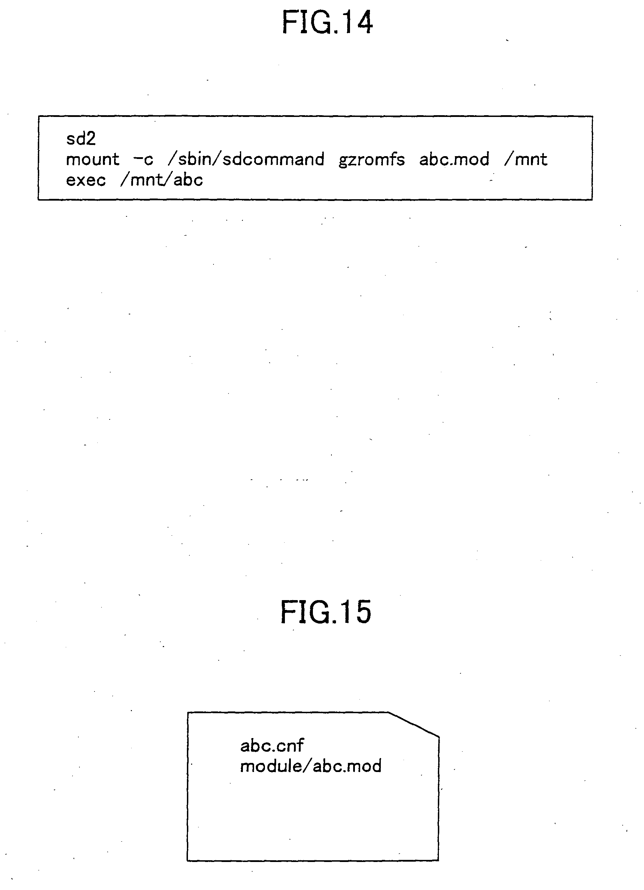

Referring to FIG. 14, a further description of a check program contained in the configuration file is given below. The configuration file shown in FIG. 14 is stored in a SD card. "abc.cnf" denotes a configuration file, and "module/abc.mod" denotes a module file that is to be mounted and executed.

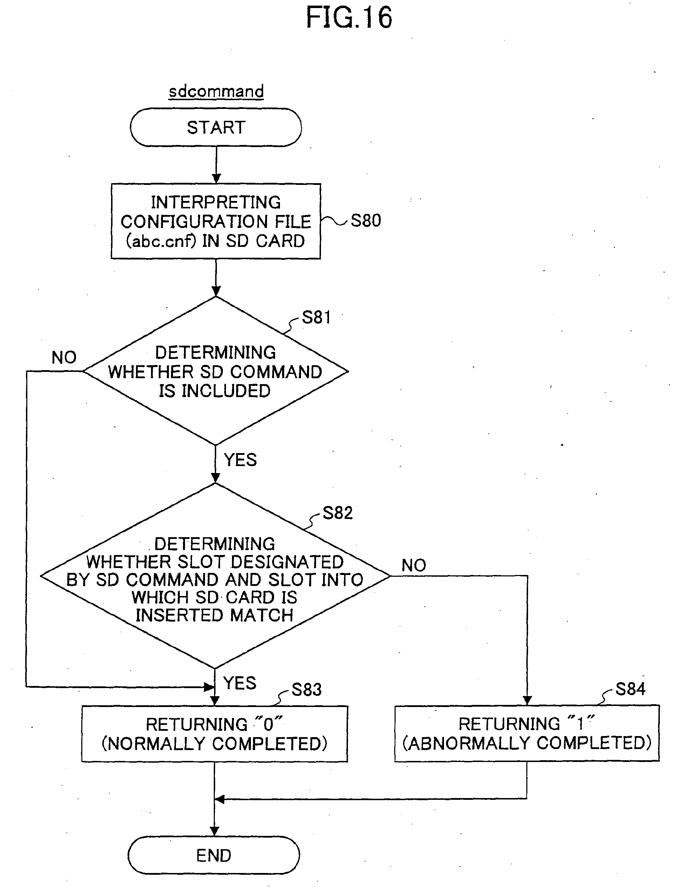

Since the configuration file shown in FIG. 14 is accompanied by a "-c" option, a check program "sdcommand" is activated. The check program "sdcommand" activated by the program activation unit 52 performs, for example, processing shown in FIG. 16.

FIG. 16 is a flowchart showing exemplary processing of the check program "sdcommand". In step S80, the check program interprets the configuration file shown in FIG. 14. In step S81 after step S80, the check program determines whether a SD command is included in the configuration file based on the interpretation performed in step S80. If a determination is made that a SD command is included (YES in step S81), the process proceeds to step S82. If a determination is made that no SD command is included in the configuration file (NO in step S81), the process proceeds to step S83.

In step S82, the check program determines whether a slot designated by the SD command and a slot into which a SD card is inserted match. The slot designated in the SD command in the configuration file shown in FIG. 14 is "2". If the slot into which the SD card is inserted is "2", the check program determines that the slot designated in the SD command and the slot into which the SD card is inserted match.

If a determination is made that the slot designated in the SD command and the slot into which the SD card is inserted match (YES in step S82), the check program proceeds to step S83 and sends a value "0" indicating that the check program has ended normally to the program activation unit 52. Otherwise, the check program proceeds to step S84 and sends a value "1" indicating that the check program has ended abnormally to the program activation unit 52.

According to the processing shown in the flowchart of FIG. 16, when the slot designated in the SD command and the slot into which the SD card is inserted match, the check program can inform the program activation unit 52 of the normal ending of the check program. When the slot designated in the SD command and the slot into which the SD card is inserted do not match, the check program can inform the program activation unit 52 of the abnormal ending of the check program.

In response to receipt of information indicating normal ending, the program activation unit 52 mounts the ROMFS-formatted module file "abc.mod" compressed with gzip to the mount point "/mnt", and executes the module file. The program activation unit 52, in response to receipt of information indicating abnormal ending, does not mount and execute the module file.

According to the above arrangement, the program activation unit 52 can avoid mounting the module file stored in the SD card inserted in a slot that is not designated by the SD command by using the information indicating whether the ending is normal, sent from the check program.

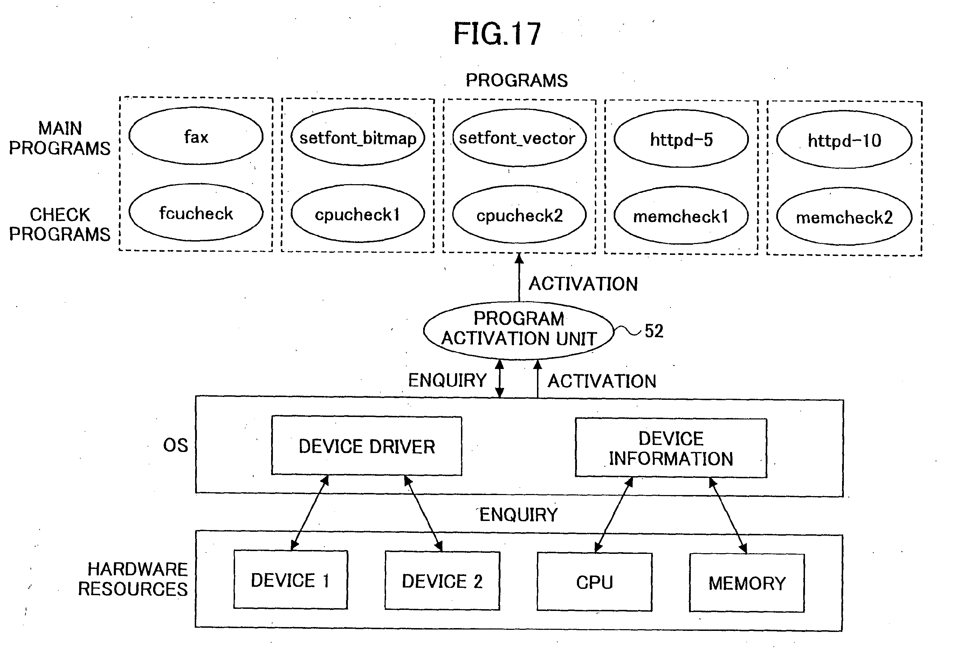

The configuration file shown in FIG. 6 is based on relations among the main programs, the check programs, the program activation unit 52, the OS, and the hardware resources, for example, as shown in FIG. 17. FIG. 17 is a relation diagram showing the main programs, the check programs, the program activation unit 52, the OS, and the hardware resources.

The program activation unit 52 activates the check programs in a designated order and, if the check program ends normally, activates the main program corresponding to the check program. In FIG. 17, the main program and the check program surrounded by a dotted line correspond to each other.

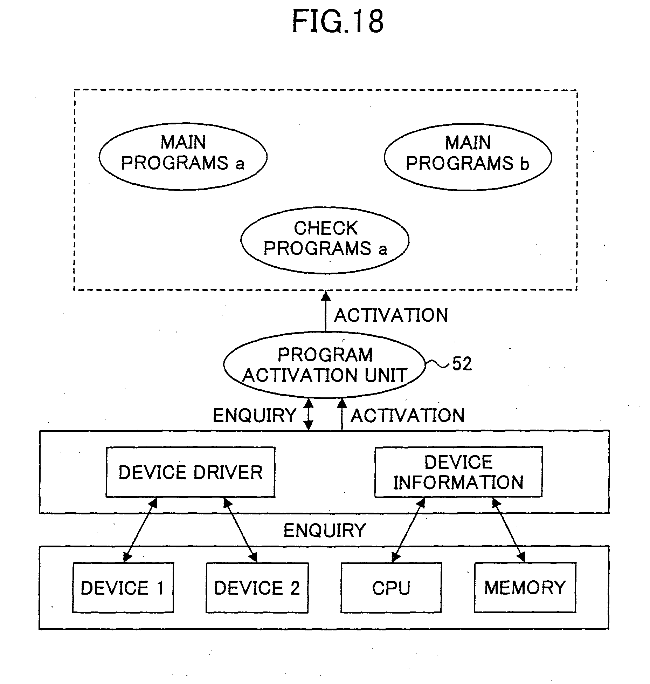

The check programs and the main programs may have 1-to-1 relations as shown in FIG. 17, or they may have 1-to-n relations as shown in FIG. 18.

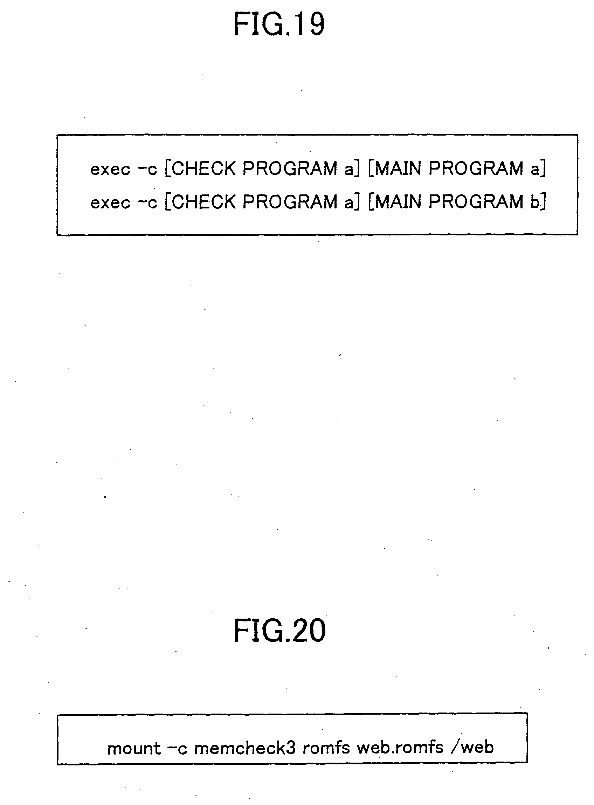

FIG. 18 is a relation diagram in which a plurality of main programs are related to a check program. In FIG. 18, the check program "a" corresponds to the main programs "a" and "b". The program activation unit 52 activates the check program "a", and if the check program "a" is completed normally, activates the main programs "a" and "b". When the check program "a" corresponds to the main programs "a" and "b" as shown in FIG. 18, the 1-to-2 relation, for example, may be represented in the configuration file as shown in FIG. 19. FIG. 19 shows an exemplary configuration file in which the check program and the main programs have a 1-to-2 relation. Processing of the program activation unit 52 is identical to that shown in FIG. 5, therefore no further description is given.

If multiple main programs in a directory need to be activated based on the determination by the same check program, the program activation unit 52 may prevent the directory from being mounted.

FIG. 20 shows an exemplary configuration file in which a directory is prevented from being mounted. In the configuration file shown in FIG. 20, the program activation unit 52 activates a check program "memcheck3" of the "mount" command in the first line. For example, an assumption is made that, if the memory size of the system memory 62 and the local memory 67 is 64 MB or more, the check program "memcheck3" shown in FIG. 20 be completed normally.

The program activation unit 52, if the check program is normally completed, mounts "web.romfs" designated in the "mount" command to a directory "/web". If the check program is abnormally completed, the program activation unit 52 does not mount the "web.romfs" designated in the "mount" command to the directory "/web". In this case, if the "mount" command shown in FIG. 20 is followed by the "exec" commands shown in FIG. 6, the program "/web/bin/httpd" under the directory "/web" becomes not executable. Accordingly, the program activation unit 52 can prevent the system memory 62 and the local memory 67 from being wasted depending on their memory size.

"Mount" processing of the configuration file shown in FIG. 20 is performed in step S11 of the flowchart shown in FIG. 5. The configuration file shown in FIG. 20 is an example in which the directory is prevented from being mounted depending on the memory size. According to another embodiment, the directory may be prevented from being mounted depending on the determination as to whether a specific hardware resource is connected and/or whether the CPU satisfies a predetermined performance requirement, for example.

FIG. 18 shows the exemplary 1-to-n relation of the check program and the main programs. According to another embodiment, the check programs and the main program may have an n-to-1 relation.

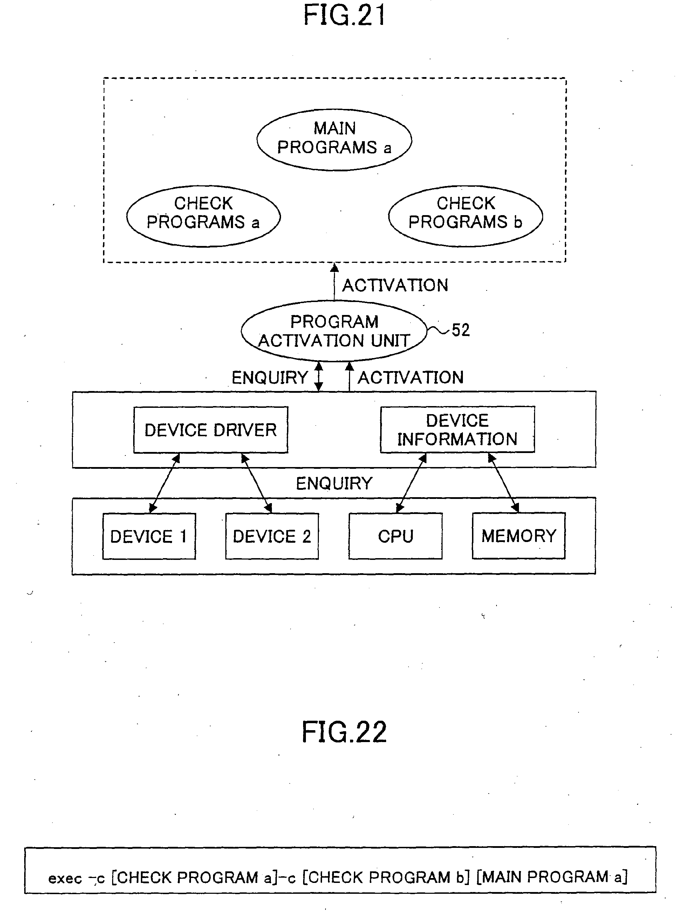

FIG. 21 is a relation diagram in which the check programs and the main program have an n-to-1 relation. In FIG. 21, check programs "a" and "b" relate to a main program "a". The program activation unit 52 activates the check programs "a" and "b", and if the check programs "a" and "b" are completed normally, activates the main program "a" corresponding to the check programs "a" and "b". In the case in which the check programs "a" and "b" correlate to the main program "a", such case may be represented by the configuration file shown in FIG. 22. FIG. 22 shows an exemplary configuration file.

In the configuration file shown in FIG. 22, an "exec" command is accompanied by two "-c" options with check programs "check program a" and check program b". The program activation unit 52 activates the check programs "a" and "b" in step S13 shown in FIG. 5. The program activation unit 52 determines whether both check programs "a" and "b" are completed normally in step S14, and if a determination is made that both check programs have ended normally, activates the main program "a" designated by the "exec" command. Since processing of the program activation unit 52 other than step S13 and S14 is identical to that shown in FIG. 5, no further description is given here.

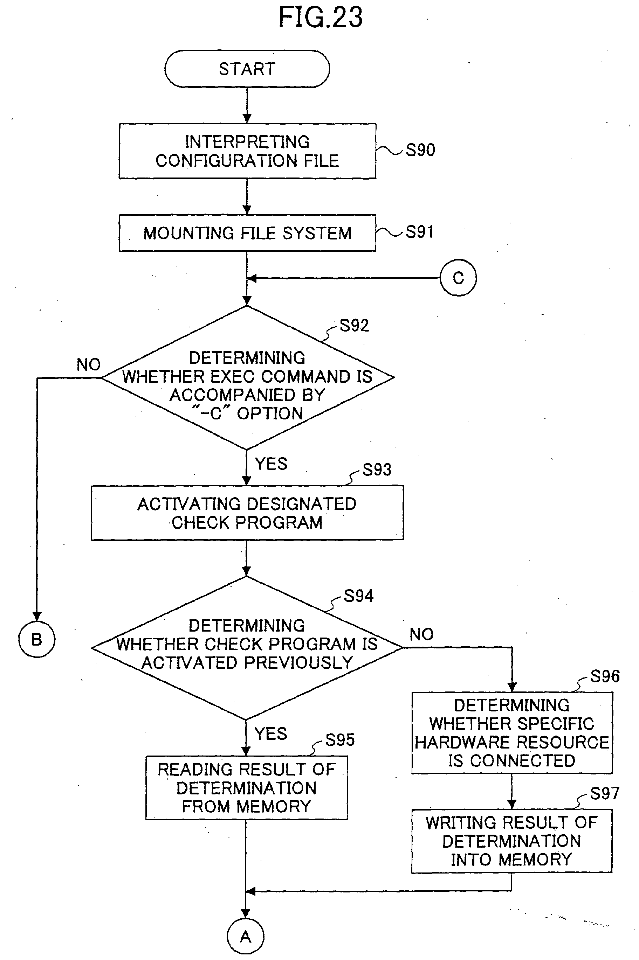

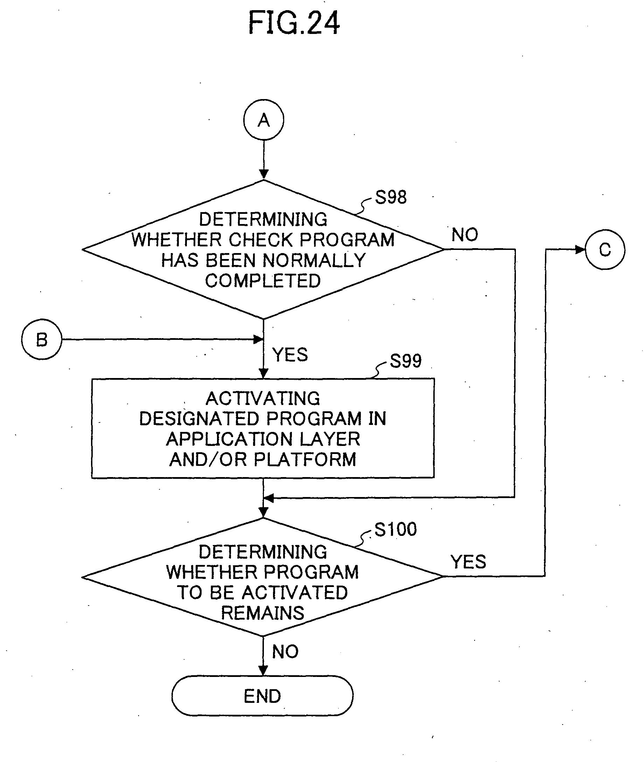

The same check program may need to be activated more than once in accordance with the configuration file. In this case, it is preferred that the determination made by the first execution of the check program be stored and, when the same check program is to be executed, the stored determination is referred to instead of activating the same check program. According to processing as shown in FIGs. 23 and 24, the MFP 1 according to an embodiment of the present invention can use the previous determination by the check program so as to reduce processing time.

FIGs. 23 and 24 show a flowchart of exemplary processing of the program activation unit 52 and the check program. Since steps S90 through S93 are identical to steps S10 through S13, respectively, shown in FIG. 5, their description is omitted.

In step S94, the check program activated in step S93 determines whether the result of the previous determination is stored in a predetermined memory region, that is, whether the determination has been made by the check program. The predetermined memory region in which the result of the previous determination is stored may be a memory region that the process of the check program can access directly without being mediated by the OS. If a determination is made that the result of the previous determination is stored (YES in step S94), the process proceeds to step S95. The check program reads the result of the previous determination from the predetermined memory region, and informs the program activation unit 52 of the read result. The process then proceeds to step S98. If a determination is made that no result of determination is stored (NO in step S94), the check program proceeds to step S96, and determines, for example, whether a specific hardware resource is connected.

In step S97 after step S96, the check program writes the result of the determination in the predetermined memory region. After informing the program activation unit 52 of the result of determination, the check program proceeds to step S98. Because steps S98 through S100 are identical to steps S14 through S16 shown in FIG. 5, respectively, their description is omitted here. According to processing shown in the flowchart of FIGS. 23 and 24, the MFP 1 can use the result of a previous determination made by the same check program and prevent the same check program from being activated more than once.

When the MFP 1 is turned on, the MFP 1 may activate all check programs, and write the result of determinations made by the activated check programs in the predetermined memory region. In this case, the MFP 1 can use the result of determinations written in the predetermined memory region. Accordingly, the MFP 1 can reduce processing time.

### [SECOND EMBODIMENT]

In the above embodiment, before activating a main program, the program activation unit 52 activates a check program corresponding to the main program and has the check program determine whether a specific hardware resource is connected to the MFP 1, for example. If the check program determines that the specific hardware resource is connected, the program activation unit 52 activates the main program, but if the check program determines that the specific hardware resource is not connected, the program activation unit 52 does not activate the main program.

In this embodiment of the present invention, however, the program activation unit 52 itself determines whether the specific hardware resource is connected to the MFP 1, for example. If the program activation unit 52 determines that the specific hardware resource is connected, the program activation unit 52 activates the main program, but if the program activation unit 52 determines that the specific hardware resource is not connected, the program activation unit 52 does not activate the main program.

An MFP according to the second embodiment of the present invention is described below. The MFP according to the second embodiment is almost identical to the MFP 1 according to the first embodiment, but is different in that the program activation unit itself determines whether the specific hardware resource is connected to the MFP, for example. Elements identical to those of the MFP 1 according to the first embodiment are referred to by the same numerals and their description may be omitted.

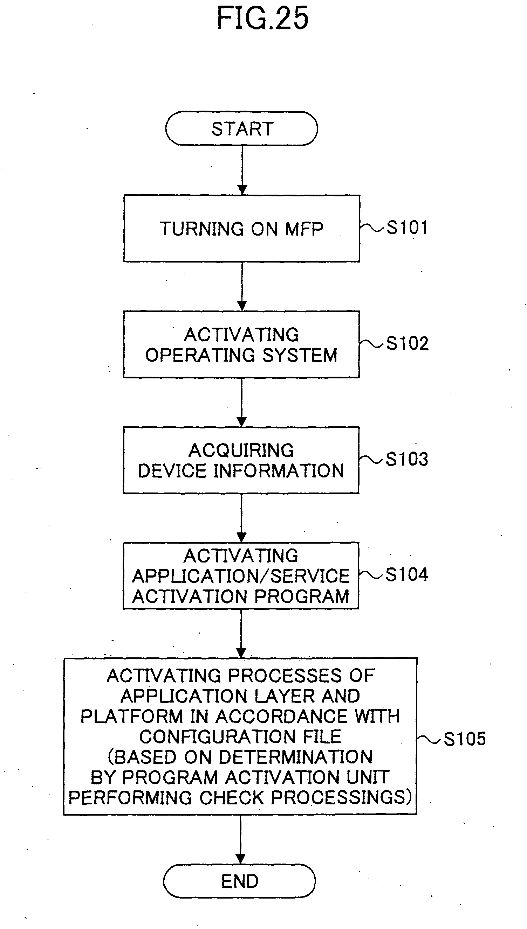

FIG. 25 is a flowchart for explaining the operation of the MFP activation unit according to the second embodiment. Since steps S101 through S104 are identical to steps S1 through S4 shown in FIG. 4, their description is omitted here.

In step S105 after step S104, the program activation unit 52 mounts the file system in accordance with a configuration file.

The program activation unit 52 checks the hardware resources, that is, determines whether a specific hardware resource is connected to the MFP 1 and/or whether a specific hardware resource satisfies certain conditions, for example (hereinafter the determination may be referred to as "check processing"). The program activation unit 52 determines whether to activate a program of the application layer 5 and/or the platform 6 (the program may be referred to as a "main program") designated in the configuration file by determining whether the check processing is completed normally.

When the program activation unit 52 determines that it should activate the main program, the program activation unit 52 reads the main program from the ROM, for example, in accordance with the configuration file, and loads the read main program in the memory region reserved in the system memory 62 and the local memory 67. Then, the program activation unit 52 activates the main program as a process. Processing of the program activation unit 52 in step S105 is described in further detail.

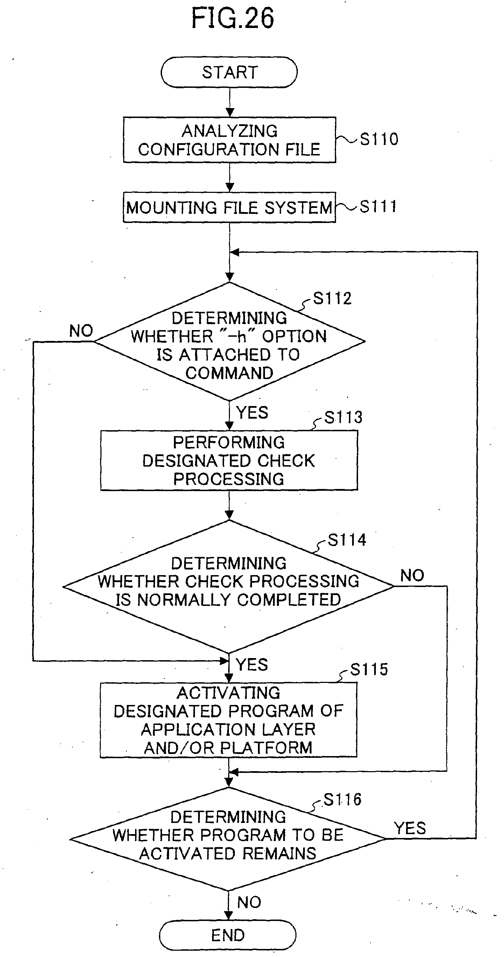

FIG. 26 is a flowchart showing processing of the program activation unit 52. In step S110, the program activation unit 52 interprets the configuration file. In step S111 after step S110, the program activation unit 52 mounts the file system in accordance with the configuration file.

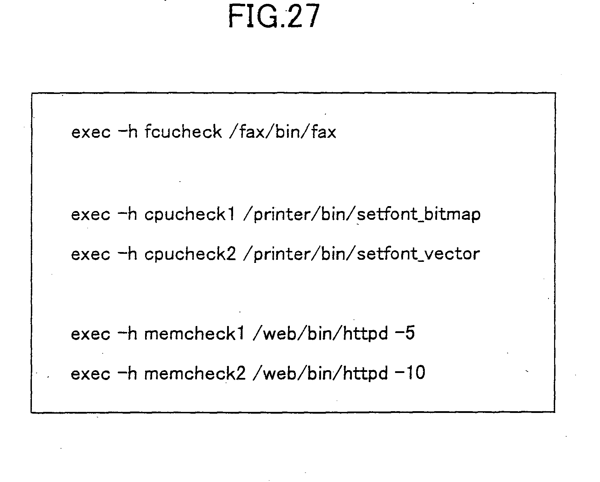

In step S112 after step S111, the program activation unit 52 reads an "exec" command written in the configuration file, and determines whether the "exec" command has an "-h" option therein. FIG. 27 shows an exemplary configuration file. In this case, the program activation unit 52 determines that the "exec" command in the first line has an "-h" option. If the program activation unit 52 determines that there is "-h" option in the "exec" command (YES in step S112), in step S113, the program activation unit 52 performs the check processing designated by the "exec" command. In the case of the configuration file shown in FIG. 27, the program activation unit 52 performs a check processing "fcucheck" designated in the "exec" command in the first line. In the check processing in step S113, the program activation unit 52 checks the hardware resources (performs check processing) and acquires the result of the check processing.

In step S114 after step S113, the program activation unit 52 determines whether the check processing has been normally completed based on the acquired result of the check processing. If the program activation unit 52 determines that the check processing has been normally completed (YES in step S114), the process proceeds to step S115.

In step S115, the program activation unit 52 activates the main program designated in the "exec" command. For example, in the case of the configuration file shown in FIG. 27, the program activation unit 52 activates a main program "/fax/bin/fax" designated in the "exec" command in the first line. Then, the program activation unit 14 terminates the check processing.

In step S116 after step S115, the program activation unit 52 determines whether there remains any main program that is to be activated, that is, whether there is any "exec" command remains unread in the configuration file. If the program activation unit 52 determines that there is an unread "exec" command (YES in step S116), the program activation unit 52 returns to step S112, and reads the unread "exec" command from the configuration file. The process returns to step S112, and steps after step S112 are executed.

On the other hand, if the program activation unit 52 determines that no unread "exec" command remains in the configuration file (NO in step S116), processing of the program activation unit 52 ends. In addition, if the program activation unit 52 determines that an "exec" command has no "-h" option (No in step S112), the process proceeds to step S115. The program activation unit 52 activates the main program designated in the "exec" command. If an "exec" command is not accompanied with "-h" option, the program activation unit 52 does not perform the check processing, and activates the main program that is designated in the "exec" command.

In step S114, if the program activation unit 52 determines that the check processing has not completed normally (NO in step S114), the process proceeds to step S116. That is, if the performance of the check processing ended abnormally, the program activation unit 52 does not activate the main program designated in the "exec" command.

As described above with reference to the flowchart shown in FIG. 26, the program activation unit 52, if the check processing is normally completed, activates the main program designated in the "exec" command, and if the check processing is abnormally completed, does not activates the main program designated in the "exec" command.

In the above description, the case of an "exec" command is described. In the case of a "mount" command, if the check processing is normally completed, the program activation unit 52 mounts a directory as designated in the "mount" command, for example. If the check processing is abnormally completed, the program activation unit 52 does not mount the directory. In this case, as a result, the MFP 1 can prevent the directory from being mounted.

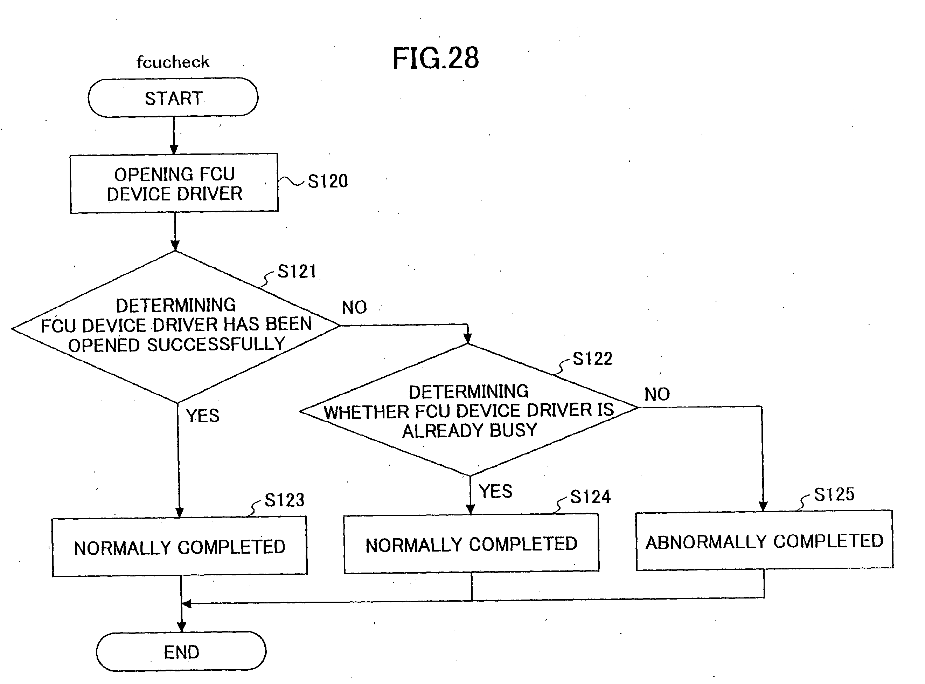

Referring to the configuration file shown in FIG. 27, a description is given of a plurality of check processings. Since the "exec" command in the first line of the configuration file shown in FIG. 27 includes an "-h" option, the program activation unit 52 performs the check processing "fcucheck". The check processing "fcucheck" performed by the program activation unit 52 is shown in FIG. 28.

FIG. 28 is a flowchart showing the check processing "fcucheck" according to an embodiment. In step S120, the program activation unit 52 opens the device driver of the FCU 81. In step S121 after step S120, the program activation unit 52 determines whether the device driver is successfully opened.

If the program activation unit 52 determines that the device driver is successfully opened (YES in step S121), the process proceeds to step S123. The program activation unit 52 determines that the FCU 81 is connected to the MFP 1, and acquires a result indicating the successful opening. If the program activation unit determines that that the opening of the device driver is unsuccessful (NO in step S121), the process proceeds to step S122. The program activation unit 52 determines whether the device driver of the FCU 81 is busy. The program activation unit 52 may be able to determine whether the FCU 81 is busy by determining whether "errono" contains "EBUSY".

If the program activation unit 52 determines that the FCU 81 is already opened and busy (YES in step S122), the process proceeds to step S124. The program activation unit 52 determines that the FCU 81 is connected to the MFP 1, and acquires a result indicating a normal completion. However, if the program activation unit 52 does not determine that the FCU 81 is busy (NO in step S122), the process proceeds to step S125. The program activation unit 52 determines that the FCU 81 is not connected to the MFP 1, and acquires the result indicating abnormal completion.

According to processing described in the flowchart shown in FIG. 28, if the FCU 81 is connected to the MFP 1, the program activation unit 52 acquires the result indicating normal completion of the check processing. If the FCU 81 is not connected to the MFP 1, the program activation unit 52 acquires the result indicating abnormal completion of the check processing. In response to acquisition of the result indicating normal completion of the check processing, the program activation unit 52 activates the application "fax". However, in response to_acquisition of the result indicating abnormal completion of the check processing, the program activation unit 52 does not activate the application "fax".

According to the above arrangement, using the result indicating normal completion or abnormal completion of the check processing, the program activation unit 52, if the FCU 81 is connected to the MFP 1, can activate the application "fax", and if the FCU 81 is not connected to the MFP 1, can prevent the application "fax" from being activated. In other words, the program activation unit 52 can control the activation of the FCU 81 based on the determination as to whether the FCU 81 is connected to the MFP 1. Processing of the program activation unit is described above using the FCU 81 as an example of the hardware resource with reference to the flowchart shown in FIG. 28. The hardware resource is not limited to the FCU 81, but is any device related to image forming. The hardware resource may be an optional board, for example, to be connected to the MFP 1. According to the flowchart shown in FIG. 28, the MFP 1 can control the activation of the programs (main programs) of the application layer and/or platform based on the information as to whether the optional board, for example, is connected thereto.

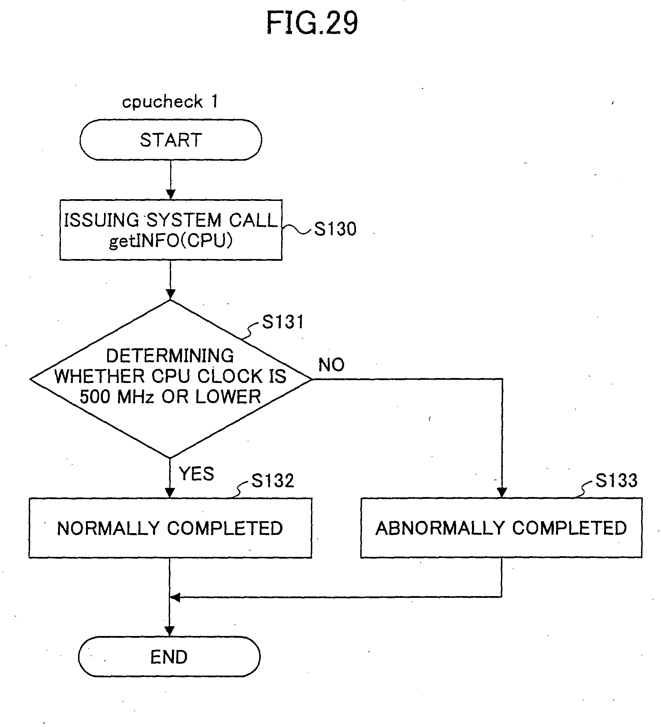

Referring to the configuration file shown in FIG. 27, when processing of the "exec" command in the first line is completed, the "exec" command in the second line is executed. Because the "exec" command in the second line includes an "-h" option, another check processing "cpucheck1" is performed. The program activation unit 52 performs the check processing "cpucheck1" as shown in the flowchart of FIG. 29, for example.

FIG. 29 shows a flowchart of the check processing "cpucheck1" according to an embodiment. In step S130, the program activation unit 52 issues a system call "getINFO(CPU)", and acquires the clock frequency included in device information of the CPU 61 from the OS.

In step S131 after step S130, the program activation unit 52 determines whether the clock frequency of the CPU 61 acquired in step S130 is 500 MHz or lower. If the program activation unit 52 determines that the clock frequency is 500 MHz or lower (YES in step S131), the process proceeds to step S132, and the program activation unit 52 acquires the result indicating normal completion of the check processing. If the program activation unit 52 determines that the clock frequency is not 500 MHz or lower (NO in step S131), the process proceeds to step S133, and the program activation unit 52 acquires the result indicating abnormal completion of the check processing.

According to processing shown in the flowchart of FIG. 29, if the clock frequency of the CPU 61 is 500 MHz or lower, the program activation unit 52 acquires the result indicating normal completion of the check processing, and if the clock frequency of the CPU 61 is not 500 MHz or lower, the program activation unit 52 acquires the result indicating abnormal completion of the check processing. In response to acquisition of the result indicating normal completion of the check processing, the program activation unit 52 activates an application "setfont_bitmap" designated in the "exec" command, but in response to acquisition of the result indicating abnormal completion of the check processing, the program activation unit 52 does not activate the application "setfont_bitmap".

According to the above arrangement, using the result indicating whether the check processing has been normally or abnormally completed, if the clock frequency of the CPU 61 is 500 MHz or lower, the program activation unit 52 sets the bitmap font as the default font of the printer. Accordingly, even if the clock frequency of the CPU 61 is 500 MHz or lower, the program activation unit 52 can cause the MFP 1 to print data at high speed using the bit map font as the default font.

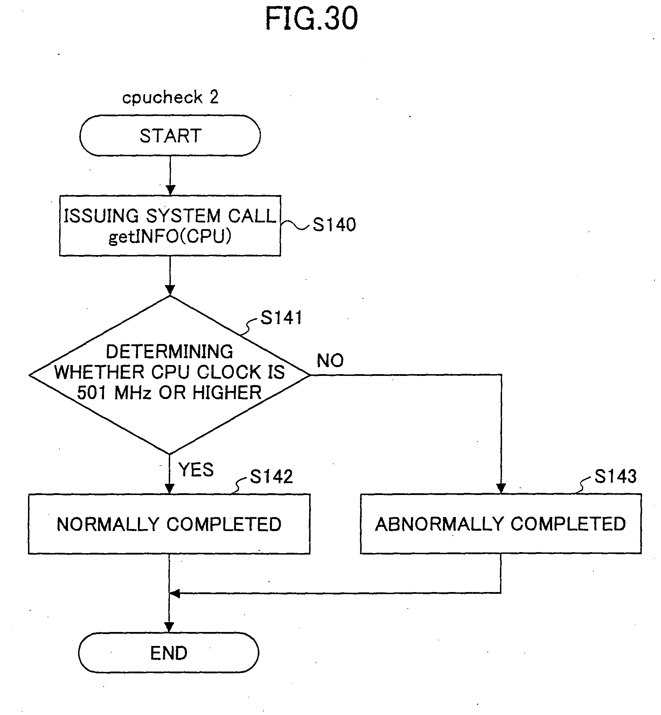

Referring to the configuration file shown in FIG. 27, after executing the "exec" command in the second line, the program activation unit executes the "exec" command in the third line. Since the "exec" command in the third line includes the "-h" option, check processing "cpucheck2" is performed. The check processing "cpucheck2" performed by the program activation unit 52 is shown in FIG. 30.

FIG. 30 is a flowchart showing an example of the check processing "cpucheck2". In step S140, the program activation unit 52 issues a system call "getINFO(CPU)", and acquires the clock frequency included in device information of the CPU 61 from the OS.

In step S141 after step S140, the program activation unit 52 determines whether the clock frequency of the CPU 61 acquired in step S140 is 501 MHz or higher. If the program activation unit 52 determines that the clock frequency of the CPU 61 is 501 MHz or higher (YES in step S141), the process proceeds to step S142, and the program activation unit 52 acquires the result indicating the normal completion of the check processing. If the program activation unit 52 determines that the clock frequency is not 501 MHz or higher (NO in step S141), the process proceeds to step S143, and the program activation unit 52 acquires the result indicating the abnormal completion of the check processing.

According to processing shown in the flowchart of FIG. 30, if the clock frequency of the CPU 61 is 501 MHz or higher, the program activation unit acquires the result indicating normal completion of the check processing, and if the clock frequency of the CPU 61 is not 501 MHz or higher, the program activation unit 52 acquires the result indicating abnormal completion of the check processing. In response to acquisition of the result indicating normal completion, the program activation unit 52 activates an application "setfont_vector" designated in the "exec" command, but in response to acquisition of the result of abnormal completion, the program activation unit 52 does not activate the application "setfont_vector".

According to the above arrangement, using the result of normal completion or abnormal completion of the check processing, the program activation unit 52 sets the vector font as the default font of the printer. Accordingly, if the clock frequency of the CPU 61 is 501 MHz or higher, the program activation unit 52 can cause the MFP 1 to print high quality fine images using the vector font as the default font.

According to the flowcharts shown in FIGs. 29 and 30, the MFP 1 according to an embodiment of the present invention can print data using, when the CPU 61 is provided with a higher clock frequency, the vector fonts so as to output images of high quality. When the CPU 61 is provided with lower clock frequency, the MFP 1 uses the bit map fonts so as to accelerate the outputting of images.

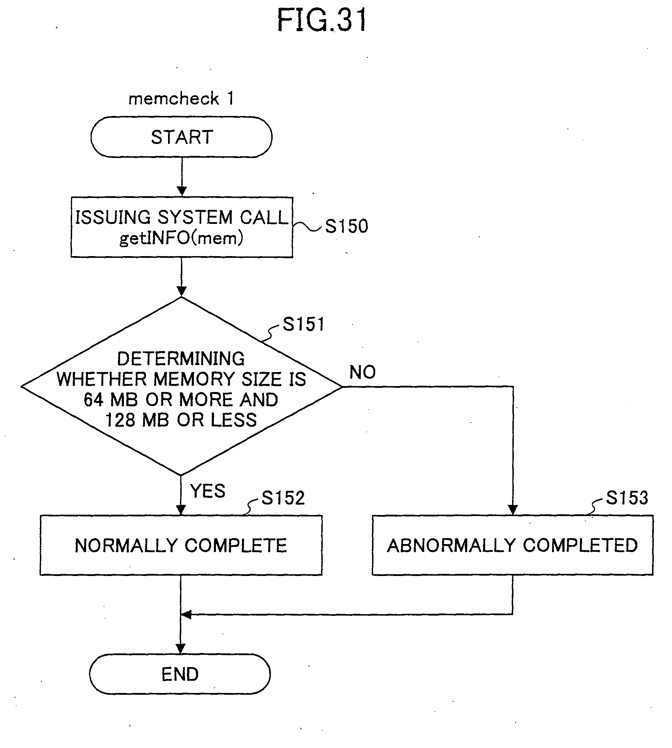

Referring to the configuration file shown in FIG. 27, after the "exec" command in the third line is executed, the next "exec" command in the fourth line is executed. Since the fourth "exec" command is accompanied by the "-h" option, the program activation unit 52 performs check processing "memcheck1". The check processing "memcheck1" performed by the program activation unit 52 is shown in FIG. 31.

FIG. 31 shows exemplary check processing "memcheck1". In step S150, the program activation unit 52 issues a system call "getINFO(mem)", and acquires information about the memory size of the system memory 62 and the local memory 67 stored in the device information from the OS. In step S151 after step S150, the program activation unit 52 determines whether the memory size acquired in step S150 is 64 MB or more and 128 MB or less.

If a determination is made that the memory size is 64 MB or more and 128 MB or less (YES in step S151), the process proceeds to step S152, and the check program sends a value "0" indicating its normal ending to the program activation unit 52. If a determination is made that the memory size is not 64 MB or more and 128 MB or less (NO in step S151), the process proceeds to step S153, and the check program sends a value "1" indicating its abnormal ending to the program activation unit 52.

If a determination is made that the memory size is 64 MB or more and 128 MB or less (YES in step S151), the process proceeds to step S152, and the program activation unit 52 acquires the result indicating normal completion of the check processing. If a determination is made that the memory size is not 64 MB or more and 128 MB or less (NO in step S151), the process proceeds to step S153, and the program activation unit 52 acquires the result indicating abnormal completion of the check processing.

According to processing shown in the flowchart of FIG. 31, if the memory size is 64 MB or more and 128 MB or less, the program activation unit 52 can acquire the result indicating normal completion of the check processing. If the memory size is not 64 MB or more and 128 MB or less, the program activation unit 52 acquires the result indicating abnormal completion of the check processing. In response to acquisition of the result indicating normal completion, the program activation unit 52 activates five http daemons (httpd) and, in response to acquisition of the result indicating abnormal completion of the check processing, the program activation unit 52 does not activate the httpds.

According to the above arrangement, the program activation unit 52 can determine the number of httpds to be activated using the result indicating normal completion or abnormal completion of the check processing. If the memory size of the system memory 62 and the local memory 67 is small, the program activation unit 52 can reduce the number of httpds to be activated so as to save memory.

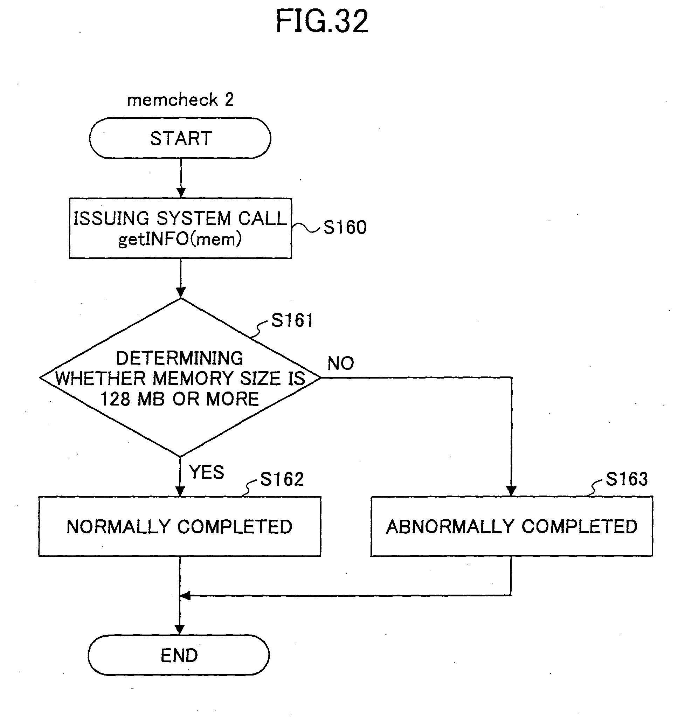

After the fourth "exec" command of the configuration file shown in FIG. 27 is executed, the "exec" command'in the fifth line is executed. Because the fifth "exec" command is accompanied with an "-h" option, the program activation unit 52 performs check processing "memcheck2". The check processing "memcheck2" performed by the program activation unit 52 is shown in FIG. 32, for example.

FIG. 32 is a flowchart showing the check processing "memcheck2". In step S160, the program activation unit 52 issues a system call "getINFO(mem)", and acquires information about the memory size of the system memory 62 and the local memory 67 stored in the device information from the OS. In step S161 after step S160, the program activation unit 52 determines whether the memory size acquired in step S160 is 128 MB or more.

If a determination is made that the memory size is 128 MB or more (YES in step S161), the process proceeds to step S162, and the program activation unit 52 acquires a result indicating normal completion of the check processing. On the other hand, if a determination is made that the memory size is not 128 MB or more (NO in step S161), the process proceeds to step S163, and the program activation unit 52 acquires a result indicating abnormal completion of the check processing.

According to processing shown in the flowchart of FIG. 32, if the memory size is 128 MB or more, the program activation unit 52 can acquire a result indicating normal completion of the check processing. If the memory size is not 128 MB or more, the program activation unit 52 acquires a result indicating abnormal completion of the check processing. In response to acquisition of the result indicating normal completion, the program activation unit 52 activates ten httpds. But, in response to acquisition of the result indicating abnormal completion, the program activation unit 52 does not activate any httpds.

According to the above arrangement, when the memory size of the system memory 62 and the local memory 67 is large, the program activation unit 52 can increase the number of activated httpds so as to improve the response of the MFP 1 to requests from clients.

According to processing shown in the flowcharts of FIGs. 31 and 32, the MFP 1 according to an embodiment of the present invention can appropriately determine the number of httpds to be activated based on the memory size of the system memory 62 and the local memory 67.

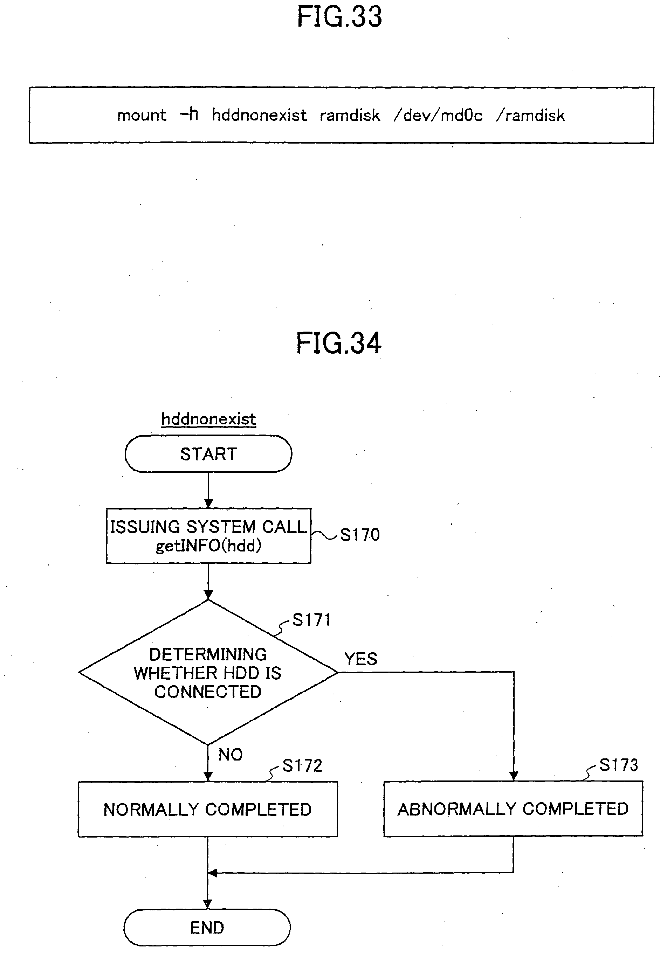

Referring to another configuration file shown in FIG. 33, a description of check processing by the program activation unit 52 is given below. The configuration file includes a "mount" command accompanied by an "-h" option. Accordingly, when the "mount" command is executed, a check processing "hddnonexist" is performed. The program activation unit 52 performing the check processing "hddnonexist" operates as shown in FIG. 34.

FIG. 34 is a flowchart showing the check processing "hddnonexist". In step S170, the program activation unit 52 issues a system call "getINFO(hdd)", and acquires information stored in the device information from the OS whether a HDD is connected to the MFP 1.

In step S171 after step S170, the program activation unit 52 determines whether the HDD is connected to the MFP 1 based on the information acquired in step S170. If a determination is made that no HDD is connected to the MFP 1 (NO in step S171), the process proceeds to step S172, and the program activation unit acquires a result indicating normal completion of the check processing. On the other hand, if a determination is made that a HDD is connected to the MFP 1 (YES in step S171), the process proceeds to step S173, and the program activation unit 52 acquires a result indicating abnormal completion of the check processing.

According to processing shown in the flowchart of FIG. 34, if no HDD is connected to the MFP 1, the program activation unit 52 can acquire the result indicating normal completion of the check processing. If a HDD is connected to the MFP 1, the program activation unit 52 can acquire the result indicating abnormal completion of the check processing. In response to acquisition of the result indicating normal completion of the check processing, the program activation unit 52 mounts a ramdisk. Specifically, "/dev/md0c" is mounted to the mount point "/ramdisk". In response to acquisition of the result indicating abnormal completion of the check processing, the program activation unit 52 does not mount the ramdisk.

According to the above arrangement, using the acquired result of the check processing, the program activation unit 52 determines whether to mount the ramdisk. When no HDD is connected to the MFP 1, the program activation unit 52 mounts the ramdisk. That is, if no HDD is provided to the MFP 1, the MFP 1 can use the ramdisk as a local storage device for PDL storage. If a HDD is connected to the MFP 1, the MFP 1 can use the HDD as a local storage device for PDL storage.

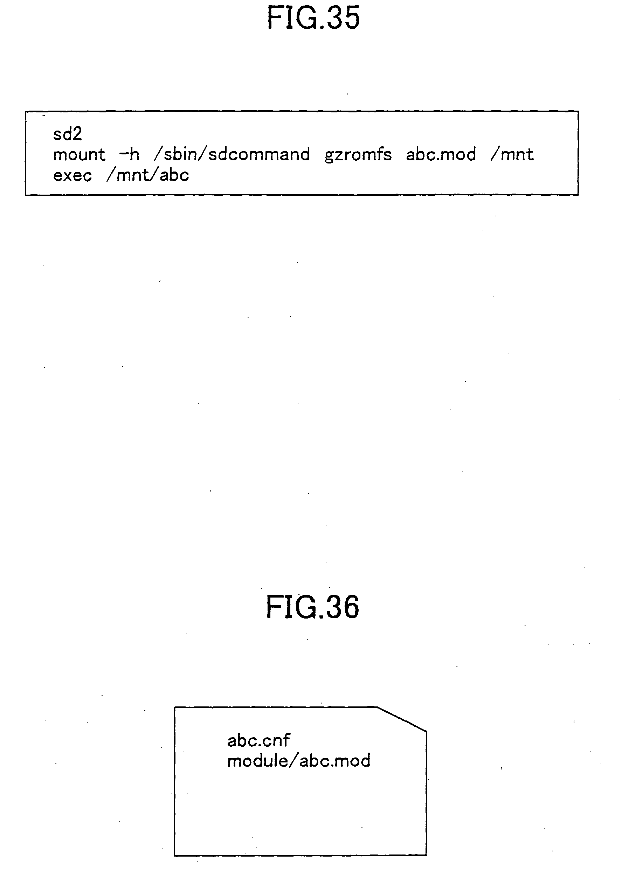

Referring to a configuration file shown in FIG. 35, a further description is given below about the check processing performed by the program activation unit 52. The configuration file is stored in a SD card as shown in FIG. 35. "abc.cnf" denotes a configuration file, and "module/abc.mod" denotes a module file that is to be mounted.

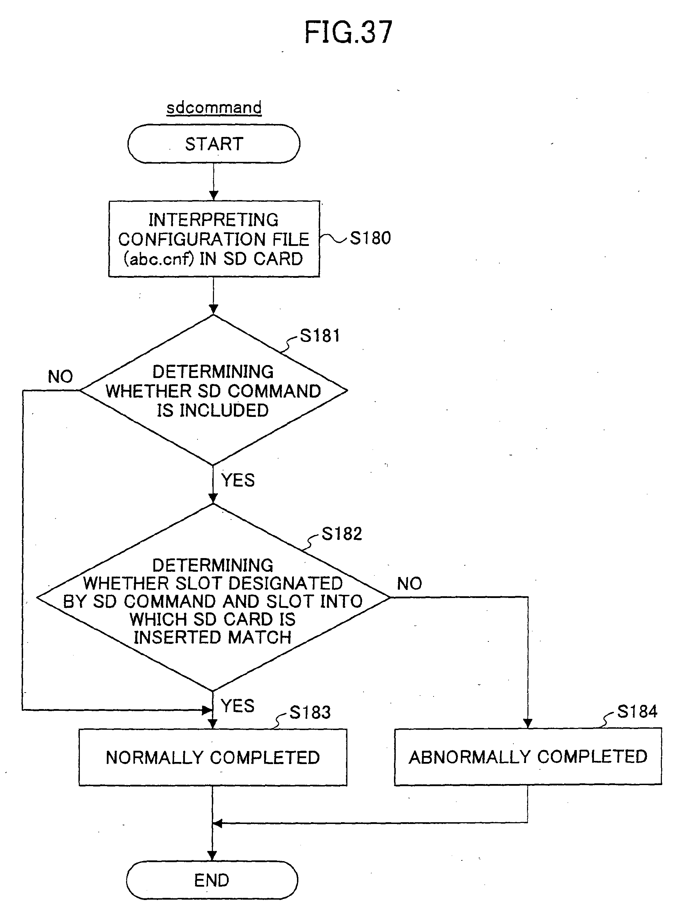

Since the configuration file shown in FIG. 35 is accompanied by a "-h" option, a check processing "sdcommand" is performed. The program activation unit 52 performing the check processing "sdcommand" operates, for example, as shown in FIG. 37.

FIG. 37 is a flowchart showing the check processing "sdcommand". In step S180, the program activation unit 52 interprets the configuration file shown in FIG. 36. In step S181 after step S180, the program activation unit 52 determines whether a SD command is included in the configuration file based on the interpretation performed in step S180. If a determination is made that a SD command is included (YES in step S181), the process proceeds to step S182. If a determination is made that no SD command is included in the configuration file (NO in step S181), the process proceeds to step S183.

In step S182, the program activation unit 52 determines whether a slot designated by the SD command and a slot into which a SD card is inserted match. For example, the slot designated in the SD command in the configuration file shown in FIG. 14 is "2". If the slot into which the SD card is inserted is "2", the program activation unit 52 determines that the slot designated in the SD command and the slot into which the SD card is inserted match.

If a determination is made that the slot designated in the SD command and the slot into which the SD card is inserted match (YES in step S182), the process proceeds to step S183. The program activation unit 52 acquires a result indicating normal completion of the check processing. If a determination is made that the slot designated in the SD command and the slot into which the SD card is inserted do not match (NO in step S182), the process proceeds to step S184. The program activation unit 52 acquires a result indicating abnormal completion of the check processing.

According to the processing shown in the flowchart of FIG. 37, when the slot designated in the SD command and the slot into which the SD card is inserted match, the program activation unit 52 can acquire the result indicating normal completion of the check processing. When the slot designated in the SD command and the slot into which the SD card is inserted do not match, the program activation unit 52 can acquire the result indicating abnormal completion of the check processing.

In response to acquisition of the result indicating normal completion of the check processing, the program activation unit 52 mounts the ROMFS-formatted module file "abc.mod" compressed with gzip to the mount point "/mnt", and executes the module file. The program activation unit 52, in response to acquisition of the result indicating abnormal completion of the check processing, does not mount and execute the module file.

According to the above arrangement, the program activation unit 52 can avoid mounting the module file stored in the SD card inserted in a slot that is not designated by the SD command using the result indicating normal completion or the result indicating abnormal completion.

The configuration file shown in FIG. 27 is based on relations among the main programs, the check processings, the program activation unit 52, the OS, and the hardware resources, for example, as shown in FIG. 17. FIG. 17 is a relation diagram showing the main programs, the check processings, the program activation unit 52, the OS, and the hardware resources.

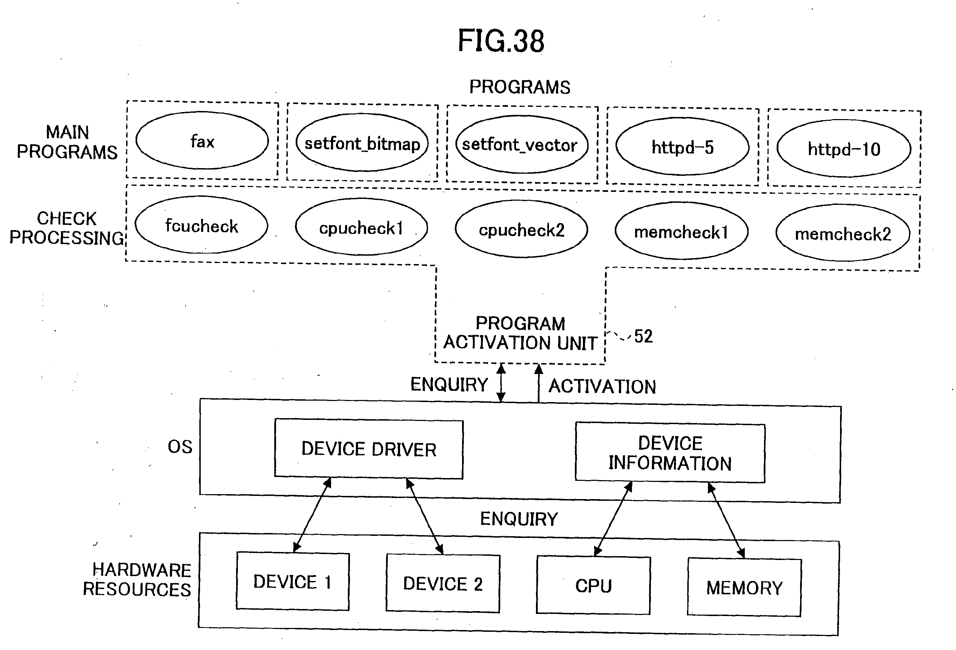

The program activation unit 52 performs the check processing in a designated order and, if the check processing is completed normally, activates the main program corresponding to the check processing. In FIG. 38, the main program is shown above the corresponding check processing.

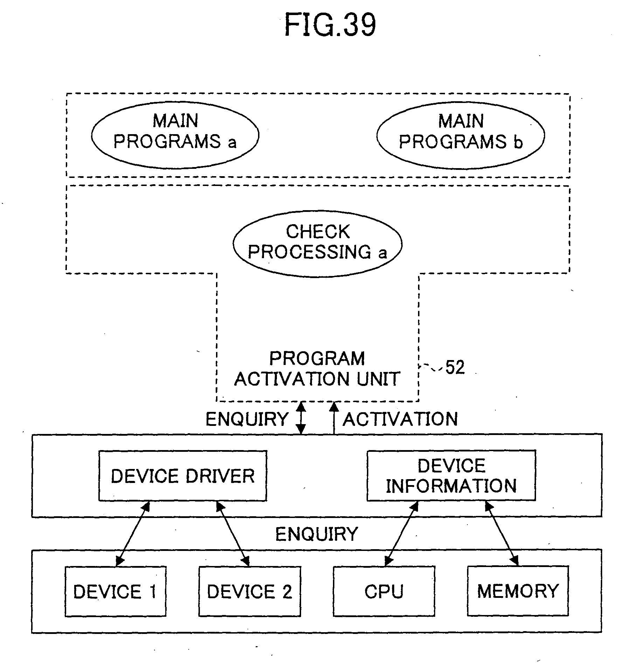

The check processings and the main programs may have 1-to-1 relations as shown in FIG. 38, but they may have 1-to-n relations as shown in FIG. 39.

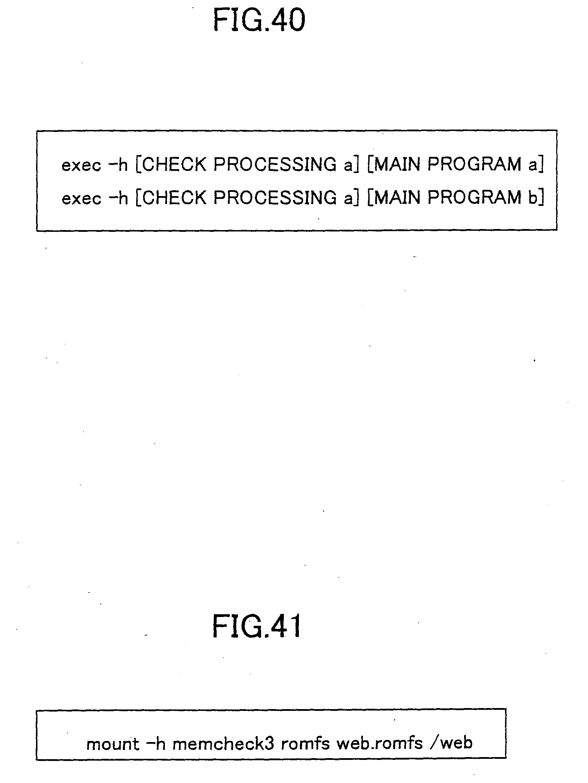

FIG. 39 is a relation diagram in which a plurality of main programs are related to a check processing. In FIG. 39, the check processing "a" corresponds to the main programs "a" and "b". The program activation unit 52 performs the check processing "a", and if the check processing "a" is completed normally, activates the main programs "a" and "b". The check processing "a" corresponds to the main programs "a" and "b" as shown in FIG. 39, and the 1-to-2 relation is represented in the configuration file shown in FIG. 40. FIG. 40 shows an exemplary configuration file in which the check program and the main processings have a 1-to-2 relation. Since processing of the program activation unit 52 is identical to that shown in FIG. 26, no further description is given.

If multiple main programs in a directory need to be activated based on the determination by performing the same check processing, the program activation unit 52 may prevent the directory from being mounted.

FIG. 41 shows an exemplary configuration file in which a directory is prevented from being mounted. In the configuration file shown in FIG. 41, the program activation unit 52 performs a check processing "memcheck3" of the "mount" command in the first line. For example, an assumption is made that, if the memory size of the system memory 62 and the local memory 67 is 64 MB or more, the check processing "memcheck3" will be completed normally.

The program activation unit 52, if the check processing is normally completed, mounts "web.romfs" designated in the "mount" command to a directory "/web". If the check processing is abnormally completed, the program activation unit 52 does not mount the "web.romfs" designated in the "mount" command to the directory "/web". In this case, if the "mount" command shown in FIG. 41 is followed by the "exec" commands shown in FIG. 27, the program "/web/bin/httpd" under the directory "/web" becomes not executable. Accordingly, the program activation unit 52 can prevent the system memory 62 and the local memory 67 from being wasted depending on their memory size.

"Mount" processing of the configuration file shown in FIG. 41 is performed in step S111 of the flowchart shown in FIG. 26. The configuration file shown in FIG. 41 is an example in which the directory is prevented from being mounted depending on the memory size. According to another embodiment, the directory may be prevented from being mounted depending on the determination as to whether a specific hardware resource is connected and/or whether the CPU satisfies a predetermined performance requirement, for example.

FIG. 39 shows the exemplary 1-to-n relation of the check processing and the main programs. According to another embodiment, the check programs and the main program may have an n-to-1 relation.

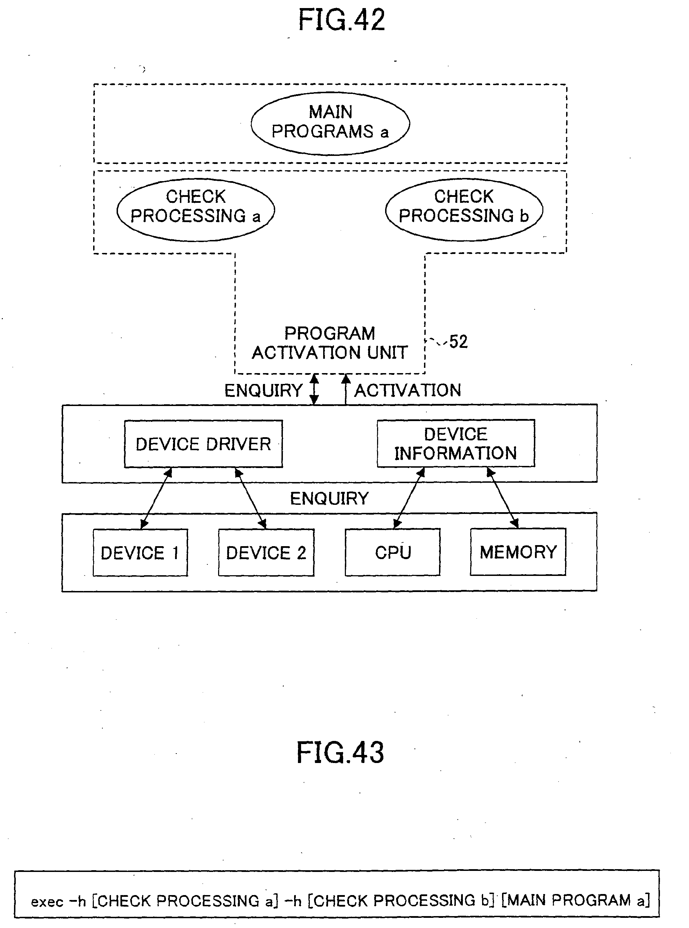

FIG. 42 is a relation diagram in which the check processings and the main program have an n-to-1 relation. In FIG. 42, check processings "a" and "b" relate to a main program "a". The program activation unit 52 performs the check processings "a" and "b". If the check processings "a" and "b" are completed normally, the program activation unit 52 activates the main program "a" corresponding to the check processings "a" and "b". In the case in which the check processings "a" and "b" correlate to the main program "a", such case may be represented by the configuration file shown in FIG. 43. FIG. 43 shows an exemplary configuration file according to an embodiment.

In the configuration file shown in FIG. 43, an "exec" command is accompanied by two "-h" options with check processings "check processing a" and "check processing b". The program activation unit 52 performs the check processings "a" and "b" in step S113 shown in FIG. 26. The program activation unit 52 determines whether both check processings "a" and "b" are completed normally in step S114, and if a determination is made that both check processings have been completed normally, activates the main program "a" designated by the "exec" command. Since processing of the program activation unit 52 other than step S113 and S114 is identical to those shown in FIG. 26, no further description is given here.

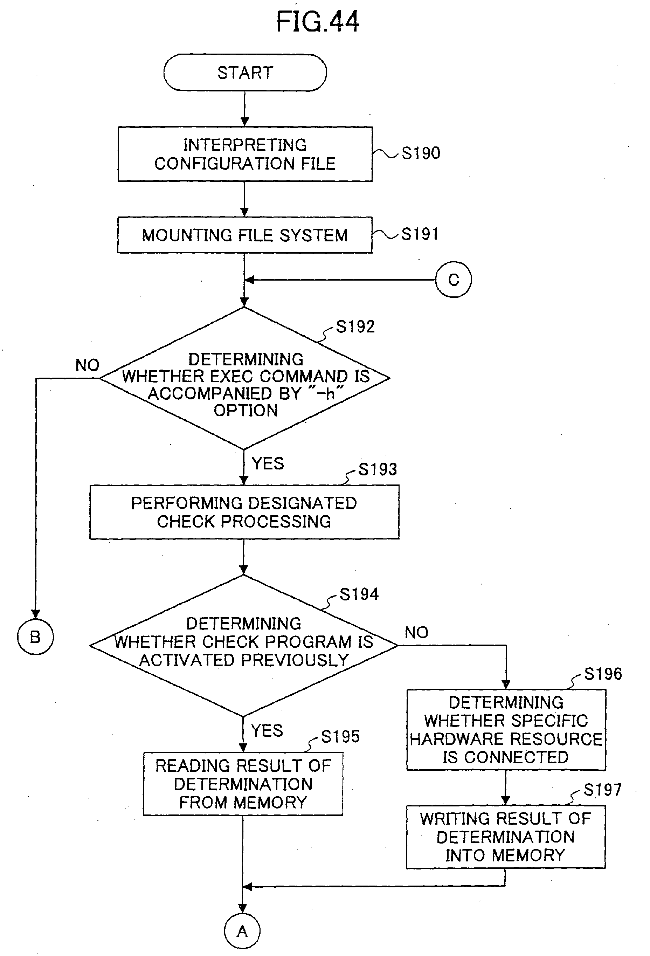

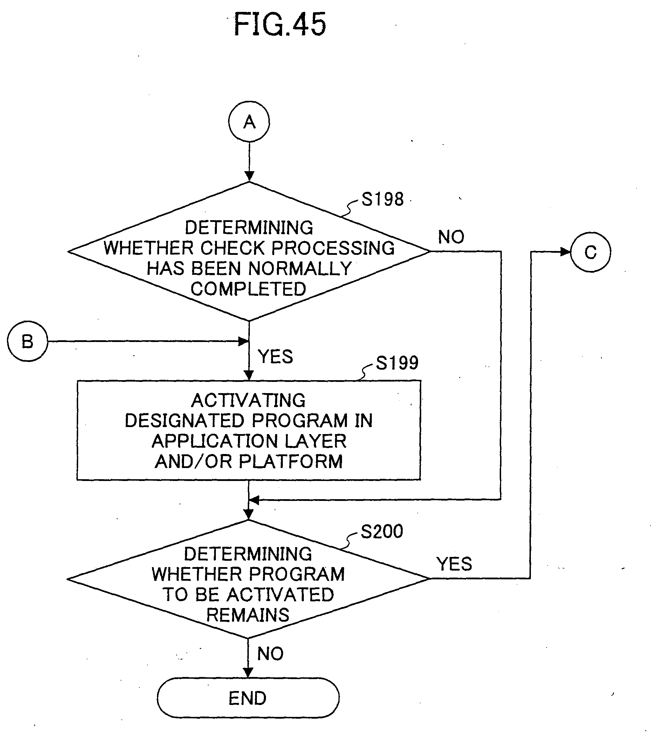

The same check processing may need to be performed more than once in accordance with the configuration file. In this case, it is preferred that the determination made by the first performance of the check processing be stored and, when the same check processing is to be performed, the stored determination be referred to instead of performing the same check processing again. According to processing as shown in FIGs. 44 and 45, the MFP 1 according to an embodiment of the present invention can use the previous determination obtained in the previous performance of the check processing so as to reduce processing time.

FIGs. 44 and 45 show a flowchart of exemplary processing of the program activation unit 52 performing check processing. Since steps S190 through S193 are identical to steps S110 through S113, respectively, shown in FIG. 26, their description is omitted.

In step S194, the program activation unit 52 determines whether a determination has been made previously and the result of the previous determination is stored in a predetermined memory region. The predetermined memory region in which the result of the previous determination is stored may be a memory region that the process of the program activation unit 52 can access directly without being mediated by the OS. If a determination is made that the result of the previous determination is stored (YES in step S194), the process proceeds to step S195. The program activation unit 52 reads the result of the previous determination from the predetermined memory region. The process proceeds to step S198. If a determination is made that no result of determination is stored (NO in step S194), the process proceeds to step S196. The program activation unit 52 performs the check processing as described above and determines, for example, whether a specific hardware resource is connected.

In step S197 after step S196, the program activation unit 52 writes the result of the determination in the predetermined memory region. The process then proceeds to step S198. Because steps S198 through S200 are identical to steps S114 through S116 shown in FIG. 26, respectively, their description is omitted here. According to processing shown in the flowchart of FIGS. 44 and 45, the MFP 1 can use the result of a previous determination made by the same check processing performed previously and prevent the same check processing from being performed more than once.

When the MFP 1 is turned on, the MFP 1 may perform all check processings, and write the result of determinations made by the check processings in the predetermined memory region. In this case, the MFP 1 can use the result of determinations written in the predetermined memory region. Accordingly, the MFP 1 can reduce processing time.

### [THIRD EMBODIMENT]

The MFP 1 according to a third embodiment is basically identical to the MFP 1 according to the first and second embodiments described above. Only differences are described in detail below. Elements of the MFP 1 according to the third embodiment that are identical to those of the MFP 1 are referred to by the same reference numerals, and their description is omitted.

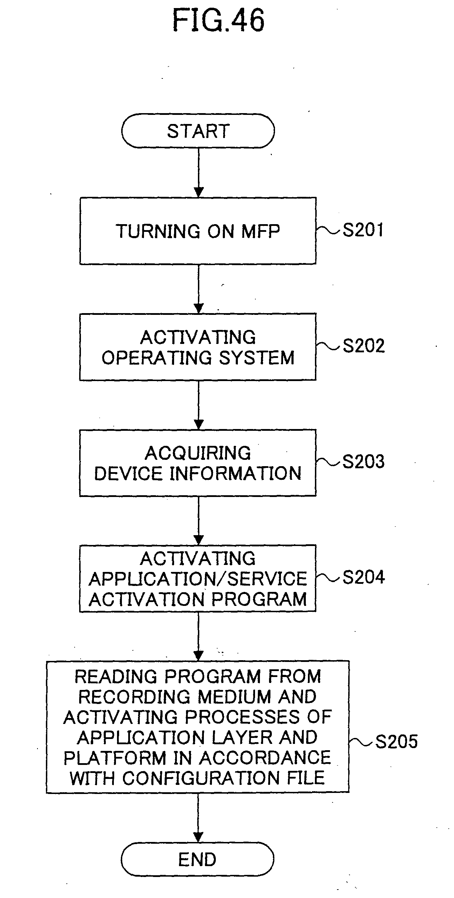

FIG. 46 is a flowchart showing processing of the MFP activation unit according to the third embodiment. Since steps S201 through S204 are identical to steps S1 through S4 of the flowchart shown in FIG. 4, their description is omitted. In step S205 after step S204, the program activation unit 52 mounts the file system in accordance with the configuration file. The program activation unit 52 reads programs from the ROM, for example, in accordance with the configuration file. The read programs are loaded to the memory regions reserved in the system memory 62 and the local memory 67, and are activated.

A description is given below about processing in which an SD card, while the MFP 1 is turned on, is inserted, the file system is mounted in accordance with the configuration file stored in the SD card, and a process of the application layer 5 and/or the platform 6 is activated in accordance with a predetermined configuration file.

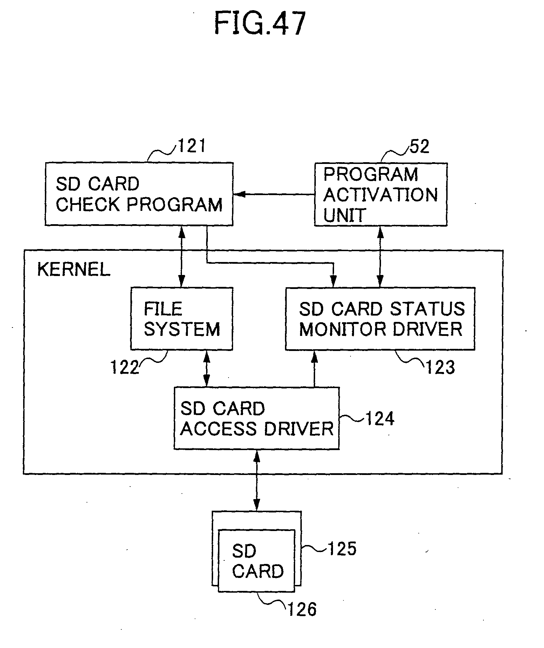

FIG. 47 is a schematic diagram showing a portion of the MFP 1 for explaining a method of activating a program according to the third embodiment. The SD 126 can be inserted into the SD card slot 125 and can be pulled out from the SD card slot 125 while the power of the MFP 1 is on. The SD card slot sends an interrupt to an SD card access driver 124 in response to insertion or removal of the SD card.

The SD card access driver 124 controls access to the SD card 126. The SD card access driver 124 informs an SD card status monitor driver 123 of the insertion or removal of the SD card 126 in response to the interrupt from the SD card slot 125. The SD card status monitor driver 123 manages status information of the SD card 126 including the insertion and removal of the SD card and the mount and unmount, and gives the status information to the program activation unit 52.

The program activation unit 52 activates the SD check program 121 in response to the insertion and removal of the SD card 126. The SD card check program 121 determines whether the SD card 126 is correctly partitioned and whether the file system 122 is in a good state, for example, and maintains the file system 122 usable. The SD card check program 121 checks, mounts, and unmounts the SD card 126 and reports on the state of the SD card 126. The program activation unit 52 activates programs stored in the SD card 126 in response to the status information of the SD card 126 from the SD card status monitor driver 123. A description is given below of a method of activating programs according to the embodiment of the present invention with reference to flowcharts.

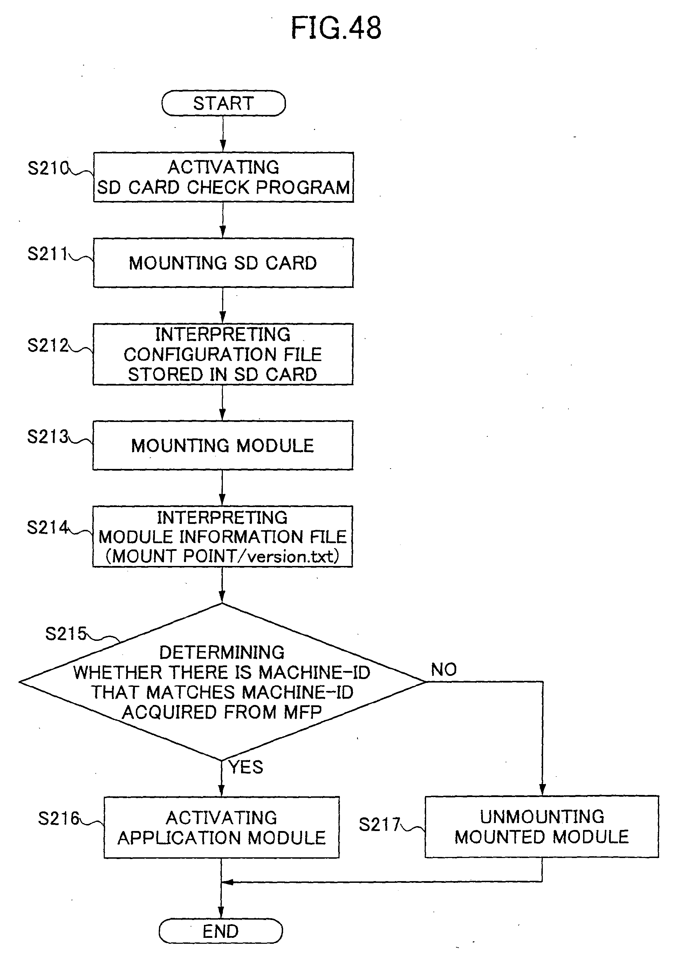

FIG. 48 is a flowchart showing processing in which a program stored in the SD card is activated. For example, when the SD card 126 is inserted to the SD card slot 125, the SD card status monitor driver 123 informs the program activation unit 52 of the insertion of the SD card. In step S210, the program activation unit 52, in response to receipt of information about the insertion of the SD card from the SD card status monitor driver 123, activates the SD card check program 121.

In step S211, the SD card check program 121 mounts the SD card 126 in accordance with a master configuration file, and informs the SD card status monitor driver 123 that the SD card 126 is mounted. In step S212, in response to receipt of information from the SD card status monitor driver 123 that the SD card 126 is mounted, the program activation unit 52 reads the configuration file from the mounted SD card and interprets the read configuration file.

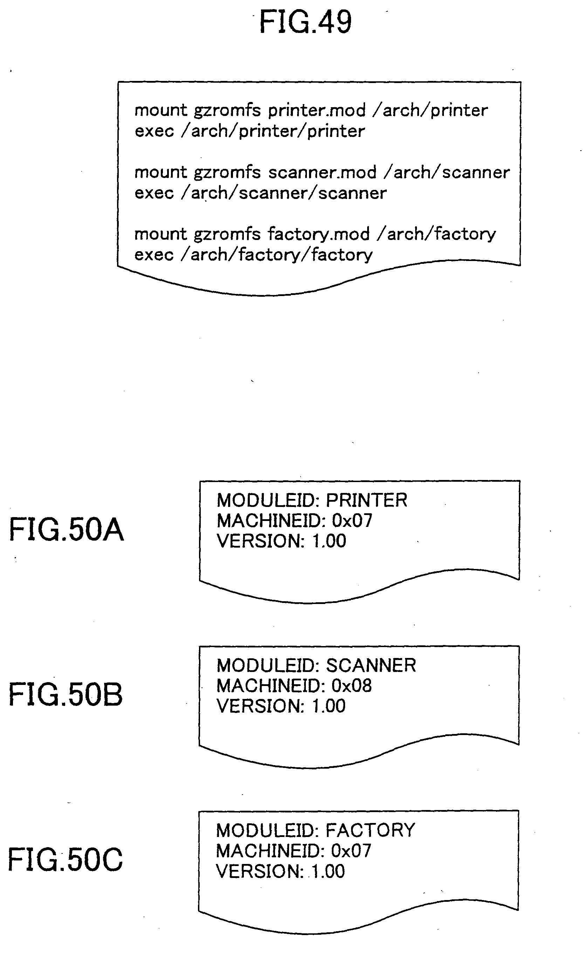

In step S213 after step S212, the program activation unit 52 mounts modules to be mounted based on the configuration file interpreted in step S212. For example, according to the configuration file shown in FIG. 49, the program activation unit 52 mounts the modules "printer.mod", "scanner.mod", and "factory.mod" to mount points "/arch/printer/", "/arch/scanner/", and "/arch/factory/", respectively.

In step S214, the program activation unit 52 reads module information files in the mount points based on the configuration file interpreted in step S212, and interprets the read module files. For example, the program activation unit 52 reads the module information file (version.txt) shown in FIG. 48 S214, and interprets the read module information file.

FIGs. 50A through 50C are exemplary module information files according to an embodiment. FIG. 50A is the module information file of the module "printer.mod" to be mounted. FIG. 50B is the module information file of the module "scanner.mod" to be mounted. FIG. 50C is the module information file of the module "factory.mod" to be mounted.

Each of the module information files shown in FIGs. 50A through 50C includes a module ID (MOUNTID) for identifying a module to be mounted, a machine ID (MACHINEID) indicating a machine corresponding to the module to be mounted, and a version (VERSION) indicating the version of the module to be mounted. The machine IDs shown in FIGs. 50A through 50C are hexadecimal numerals "0xXX" indicating corresponding machines. A plurality of machine IDs may be designated in a module information file by listing a plurality of machines corresponding to the module to be mounted. Alternatively, no machine ID may be designated in a module information file, which means that the module supports all machines (wildcard).

In step S215 after step S214, the program activation unit 52 determines whether there is a module information file containing a machine ID that matches the machine ID of the MFP 1 based on the module information file interpreted in step S214. The program activation unit 52 can acquire the machine ID of the MFP 1 contained in the device information from the OS by issuing a system call "getINFO(machineid)".

If a determination is made that there is a module information file containing a machine ID that matches the machine ID of the MFP 1 (YES in step S215), the program activation unit 52, in step S216, activates the module to be mounted corresponding to the module information file.

On the other hand, if a determination is made that there is no module information file containing a machine ID that matches the machine ID of the MFP 1 (NO in step S215), in step S217 the program activation unit 52 unmounts the module corresponding to the module information file.

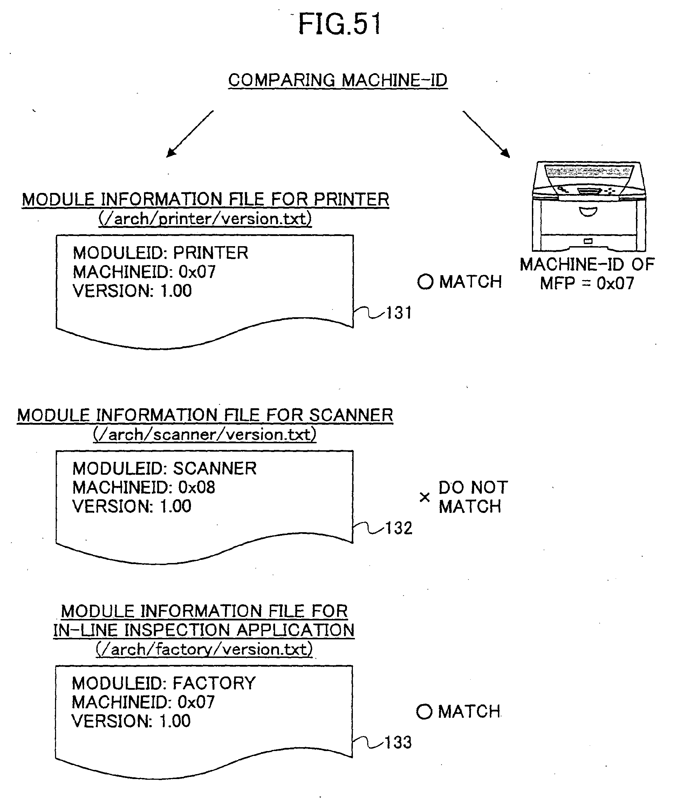

Steps S215 through S217 are described in further detail. FIG. 51 is a schematic diagram for explaining steps S215 through S217. A module information file 131 shown in FIG. 51 contains a machine ID "0x07" indicating a machine corresponding to the module "printer.mod" to be mounted. A module information file 132 contains a machine ID "0x08" indicating a machine corresponding to the module "scanner.mod" to be mounted. Furthermore, a module information file 133 contains a machine ID "0x07" indicating a machine corresponding to the module "factory.mod" to be mounted.

The machine ID of the MFP 1 is "0x07" as shown in FIG. 51. Since the machine ID "0x07" of the MFP 1 and the machine ID "0x07" contained in the module information files 131 and 133 match, the program activation unit 52 determines, in step S215, that there are two module information files each containing a machine ID that matches the machine ID of the MFP 1. According to the determination, the program activation unit 52 activates, in step S216, the modules "printer.mod" and "factory.mod" corresponding to the module information files 131 and 133, respectively.

On the other hand, since the machine ID "0x08" contained in the module information file 132 and the machine ID "0x07" of the MFP 1 do not match, the program activation unit 52 does not activate the module "scanner.mod" corresponding to the module information file 132.

According to processing shown in FIG. 48, programs stored in the SD card are activated only if the programs support the MFP 1. That is, the programs stored in the SD card are prohibited from being activated if the programs do not support the MFP 1.

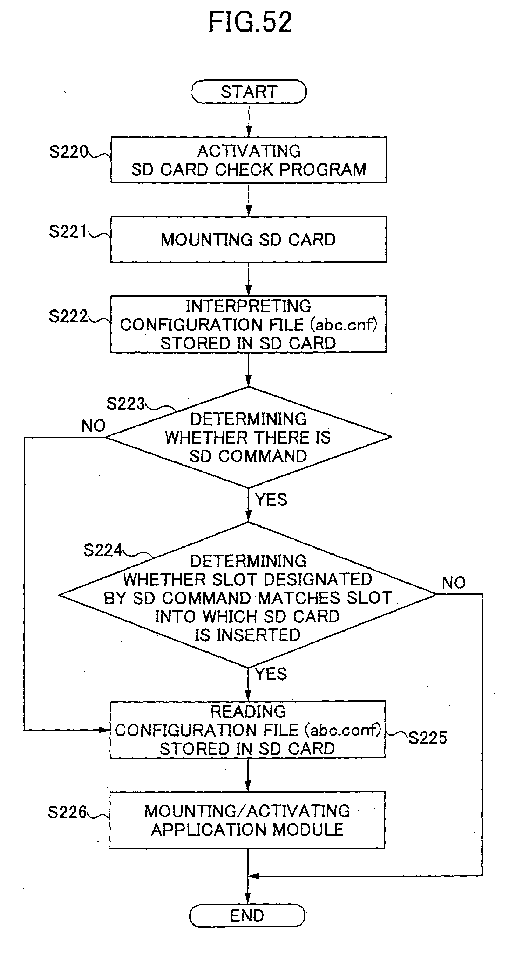

FIG. 52 is another flowchart showing processing of activating programs stored in the SD card. When the SD card 126 is inserted into the SD card slot 125, the program activation unit 52 is informed of the insertion of the SD card by the SD card status monitor driver 123. The program activation unit 52 activates the SD card check program 121 in step S220 in response to receipt of the information about the insertion of the SD card 126.

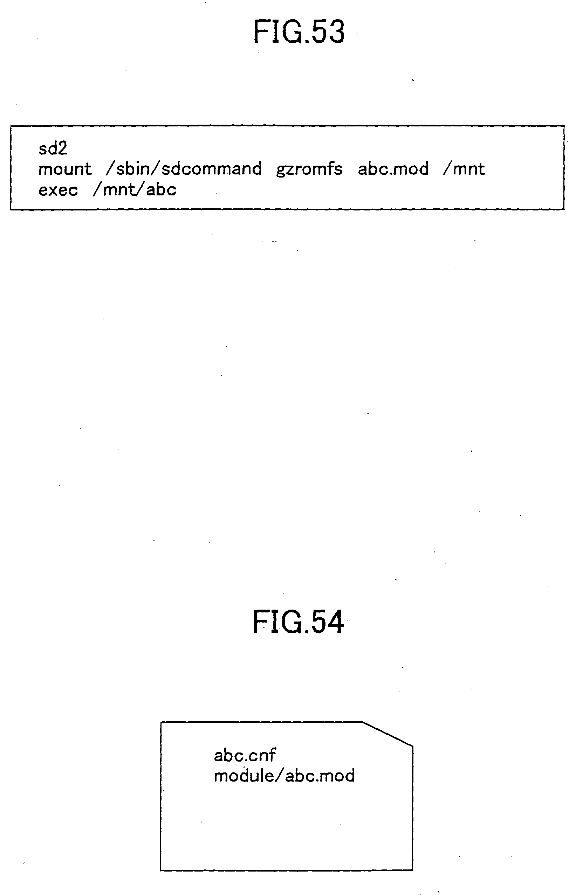

The SD card check program 121 mounts the SD card 126 in accordance with a master configuration file, and informs the SD card status monitor driver 123 that the SD card has been mounted in step S221. The program activation unit 52 reads and interprets in step S222 the configuration file stored in the mounted SD card 126 in response to receipt of information from the SD card status monitor driver 123 that the SD card 126 has been mounted in the previous step. For example, the program activation unit 52 reads and interprets a configuration file as shown in FIG. 53. FIG. 53 is another configuration file. The configuration file shown in FIG. 53 is stored in an SD card as shown in FIG. 54. "abc.cnf" shown in FIG. 54 denotes the configuration file, and "module/abc.mod" denotes a module file that is to be mounted and activated.

The program activation unit 52 determines in step S223 whether there is an SD command in the configuration file based on the interpretation made in step S222. If the program activation unit 52 determines that there is an SD command in the configuration file (YES in step S223), the process proceeds to step S224, otherwise to step S225.

The program activation unit 52 determines in step S224 whether a slot designated by the SD command matches the slot into which the SD card is inserted. The SD command in the configuration file shown in FIG. 11 designates "2" as a slot. If the SD card is inserted into a slot "2", the program activation unit 52 determines that the slot designated by the SD command matches the slot into which the SD card is actually inserted.

If the program activation unit 52 determines that a slot designated by the SD command matches the slot into which the SD card is actually inserted (YES in step S224), the program activation unit 52 reads the configuration file stored in the SD card 126 in step S225. The program activation unit 52 mounts in step S226 the module file to a mount point in accordance with the configuration file read in the previous step, and activates the mounted module file. According to the configuration file shown in FIG. 53, the program activation unit 52 mounts a ROMFS formatted module file "abc.mod" compressed with "gzip" to a mount point "/mnt", and activates the module file "abc.mod".

If the program activation unit 52 determines that the slot designated by the SD command does not match the slot into which the SD card is inserted (NO in step S224), the program activation unit 52 does not mount nor activate the module file.

According to processing shown in FIG. 52, only if the slot designated by the SD command matches the slot into which the SD card is inserted, the program activation unit mounts and activates the module file stored in the SD card. That is, the program activation unit 52 can manage the mounting and activation of programs stored in the SD card based on the slot into which the SD card is inserted.

The present application is not limited to these embodiments, and various variations and modifications may be made without departing from the scope of the present invention.

This patent application is based on Japanese Priority Patent Application No. 2002-342826 filed on November 26, 2002, No. 2003-393414 filed on November 25, 2003, No. 2003-393415 filed on November 25, 2003, No. 2003-393416 filed on November 25, 2003, the entire contents of which are hereby incorporated by reference.

## Claims

1. An image forming apparatus, comprising:
a hardware resource;
a program;
an examining unit that examines said hardware resource;
a configuration unit in which a relation between said examining unit and said program is configured; and
an activating unit that activates said program having the relation with said examining unit based on the examination of said hardware resource.

2. The image forming apparatus as claimed in claim 1, wherein said configuration unit configures a one-to-one relation between said examining unit and said program.

3. The image forming apparatus as claimed in claim 1, wherein said configuration unit configures a one-to-"n" (n: an integer more than 1) relation between said examining unit and a plurality of said programs.

4. The image forming apparatus as claimed in claim 1, wherein said configuration unit configures an "n"-to-one (n: an integer more than 1) relation between a plurality of said examining units and said program.

5. The image forming apparatus as claimed in any one of the preceding claims, further comprising:
a storage unit in which the result of the examination is stored;
wherein
said examining unit determines whether the result of the examination that said examining unit is to perform is stored in said storage unit, and uses, if the result of the examination that said examining unit is to perform is stored in said storage unit, the stored result of the examination.

6. The image forming apparatus as claimed on any one of the preceding claims, wherein
said activating unit activates said examining unit in compliance with the relation configured in said configuration unit.

7. The image forming apparatus as claimed in claim 6, wherein said activating unit, after activating said program, terminates said examining unit.

8. The image forming apparatus as claimed in any one of the preceding claims, wherein said examining unit determines whether said hardware resource exists, and outputs, in response to a positive determination, a normal value and outputs, in response to a negative determination, an abnormal value as the result of the examination.

9. The image forming apparatus as claimed in claim 8, wherein
said examining unit determines, if a device driver corresponding to said hardware resource can be successfully opened or is already opened, that said hardware resource exists, and determines that said hardware resource does not exist otherwise.

10. The image forming apparatus as claimed in claim 8 or 9 wherein:
in response to receipt of the normal value output by said examining unit in the determination as to whether said hardware resource exists that operates partially or entirely as one of a printer, a copier, a facsimile machine, and a scanner, said activating unit activates said program corresponding to the one of the printer, the copier, the facsimile machine, and the scanner.

11. The image forming apparatus as claimed in any one of the preceding claims, wherein said examining unit determines whether said hardware resource exists, and outputs, in response to a negative determination, a normal value and outputs, in response to a positive determination, an abnormal value as the result of the examination.

12. The image forming apparatus as claimed in claim 11, wherein
in response to receipt of the normal value output by said examining unit in the determination as to whether a hard disk drive exists, said activating unit mounts a RAM disk in compliance with the relation configured in said configuration unit.

13. The image forming apparatus as claimed in any one of the preceding claims, wherein said examining unit determines whether said hardware resource satisfies a predetermined performance requirement, and outputs, in response to a positive determination, a normal value and outputs, in response to a negative determination, an abnormal value as the result of the determination.

14. The image forming apparatus as claimed in claim 13, wherein
in response to receipt of the normal value output by said examining unit in the determination as to whether a central processing unit satisfies a predetermined performance requirement, said activating unit activates said program having the. relation with said examining unit, and
in response to receipt of the abnormal value output by said examining unit, said activating unit does not activate said program having the relation with said examining unit.

15. The image forming apparatus as claimed in claim 13 or 14, wherein
said activating unit, in response to receipt of the normal value from said examining unit as the result of a memory check, activates said program related to said examining unit in said configuration unit, and in response to receipt of the abnormal value from said examining unit as the result of the memory check, does not activate said program.

16. The image forming apparatus as claimed in claim 13, 14 or 15 wherein
said configuration unit configures the relation between said examining unit and one of a directory in which said program is located and an upper directory thereof; and
said activating unit, in response to receipt of the normal value as a result of the determination, mounts the directory or the upper directory related to said examining unit, and in response to receipt of the abnormal value as the result of the determination, mounts neither the directory nor the upper directory.

17. The image forming apparatus as claimed on claim 2, or any claim dependent thereon, wherein
said examining unit determines whether a predetermined identifier of said hardware resource satisfies a predetermined condition, outputs a normal value in response to a positive determination, and outputs an abnormal value in response to a negative determination.

18. The image forming apparatus as claimed in claim 17, wherein
said examining unit determines whether an identifier stored in an SD card matches an identifier of a slot to which the SD card is inserted, outputs a normal value in response to a positive determination, and outputs an abnormal value in response to a negative determination.

19. The image forming apparatus as claimed in claim 17 or 18, wherein
said activating unit executes said program configured in said configuration unit as related to said examining unit in response to receipt of the normal value from said examining unit as the result of the determination, and does not execute said program configured in said configuration unit as related to said examining unit in response to receipt of the abnormal value from said examining unit as the result of the determination.

20. The image forming apparatus as claimed in claim 5, or any claim dependent thereon, wherein
said storage unit is a memory region that said examining unit can directly access.

21. The image forming apparatus as claimed in any one of the preceding claims, wherein
said activating unit is activated by an operating system that is activated after the power of the image forming apparatus is turned on.

22. The image forming apparatus as claimed in any one of' the preceding claims; wherein said program further comprises:
an application program used for image forming;
a control service program that manages said hardware resource used for the image forming; and
an operating system.

23. An image forming apparatus according to any one of the preceding claims wherein said examining unit is a process carried out by said activating unit.

24. A method of activating a program for an image forming apparatus including a hardware resource, wherein the program causes the hardware resource to form an image, comprising the steps of:
interpreting a configuration unit in which is configured a relation between the program and an examining unit that examines the hardware resource;
activating the examining unit based on a result of the interpretation; and
activating the program having the relation with the examining unit based on a result of the examination by the examining unit.

25. A computer program that causes a computer having a hardware resource and a program to function as:
an examining unit that examines said hardware resource;
a configuration unit in which a relation between said examining unit and said program is configured; and
an activating unit that activates said program having the relation with said examining unit based on the examination.

26. An image forming apparatus, comprising
a hardware resource;
a program;
a configuration unit in which a relation between examining processing and said program is configured; and
an activating unit that performs the examining processing and activates said program having the relation with the examining processing based on the result of the examining processing.

27. A method of activating a program for an image forming apparatus including a hardware resource, wherein the program causes the hardware resource to form an image, comprising the steps of:
interpreting a configuration unit in which is configured a relation between the program and examining processing that examines the hardware resource;
performing the examining processing based on a result of the interpretation; and
activating the program having the relation with the examining processing based on a result of the examination by an activating unit.

28. A computer program that causes a computer having a hardware resource and a program to function as:
a configuration unit in which a relation between examining processing and said program is configured; and
an activating unit that performs the examining processing and activates said program having the relation with the examining processing based on the examination.

29. An image forming apparatus, comprising:
a hardware resource;
a slot that accepts a recording medium in which a program to be mounted and activated is stored; and
an activating unit that compares first machine information indicating an apparatus model corresponding to said program with second machine information indicating the apparatus model of the image forming apparatus, and if the first machine information and the second machine information match, activates the program stored in the recording medium.

30. The image forming apparatus as claimed in claim 29, wherein
said activating unit reads a configuration file stored in the recording medium in said slot, and acquires the first machine information from a mount point of the program designated in the configuration file.

31. The image forming apparatus as claimed in claim 29 or 30, wherein
said activating unit acquires the second machine information by issuing a system call.

32. The image forming apparatus as claimed in any one of claims 29 to 31, wherein
said activating unit compares the first machine information and the second machine information, activates the program stored in the recording medium if said activating unit determines that the first machine information and the second machine information match, and does not activate the program stored in the recording medium if said activating unit determines that the first machine information and the second machine information do not match.

33. The image forming apparatus as claimed in any one of claims 29 to 32, wherein
if said activating unit determines that the first machine information and the second machine information match, said activating unit activates the program that causes the image forming apparatus to function as one or more of a printer, a copier, a facsimile machine, and a scanner.

34. The image forming apparatus as claimed in any one of claims 29 to 33, wherein
said activating unit is activated by an operating system activated in response to turning on the image forming apparatus.

35. The image forming apparatus as claimed in claim 30,
wherein
said activating unit acquires the first machine information from a module information file located in a mount point of the program.

36. An image forming apparatus, comprising:
a hardware resource;
a slot that accepts a recording medium in which a program to be mounted and activated is stored; and
an activating unit that compares first identification information of a slot into which the recording medium is to be inserted and second identification information of a slot into which the recording medium is actually inserted, and activates the program stored in the recording medium if said activating unit determines that the first identification information and the second identification information match.

37. The image forming apparatus as claimed in claim 31, wherein
said activating unit reads a configuration file stored in the recording medium in said slot, and acquires the first identification information from the configuration file.

38. The image forming apparatus as claimed in claim 36 or 37, wherein
said activating unit acquires the second identification information by issuing a system call.

39. The image forming apparatus as claimed in claim 36, 37 or 38, wherein
said activating unit compares the first identification information and the second identification information, activates the program stored in the recording medium if said activating unit determines that the first identification information and the second identification information match, and does not activate the program stored in the recording medium if said activating unit determines that the first identification information and the second identification information do not match.

40. The image forming apparatus as claimed in claim 37, wherein
if the first identification information is not contained in the configuration file read from the recording medium, said activating unit activates the program to be mounted and activated stored in the recording medium.

41. The image forming apparatus as claimed in any one of claims 36 to 40, wherein
if said activating unit determines that the first identification information and the second identification information match, said activating unit activates the program to be mounted and activated that causes the image forming apparatus to function as one or more of a printer, a copier, a facsimile machine, and a scanner.

42. The image forming apparatus as claimed in any one of claims 36 to 41, wherein
said activating unit is activated by an operating system activated in response to turning on the image forming apparatus.

43. A method of activating a program for an image forming apparatus having a slot into which a recording medium is inserted, comprising the steps of:
comparing first machine information indicating an apparatus model corresponding to a program to be mounted and activated stored in the recording medium with second machine information indicating an apparatus model of the image forming apparatus; and
activating, if a determination is made that the first machine information and the second machine information match, the program to be mounted and activated.

44. A method of activating a program for an image forming apparatus having a slot into which a recording medium is inserted, comprising the steps of:
comparing first identification information of the slot into which the recording medium is to be inserted with second identification information of the slot into which the recording medium is actually inserted; and
activating, if a determination is made that the first identification information and the second identification information match, the program to be mounted and activated.

45. A computer program that causes a computer having a hardware resource and a slot that accepts a recording medium in which a program to be mounted and activated is stored, to function as:
an activating unit that compares first machine information indicating an apparatus model corresponding to said program with second machine information indicating the apparatus model of the image forming apparatus, and if the first machine information and the second machine information match, activates the program stored in the recording medium.

46. A computer program that causes a computer having a hardware resource and a slot that accepts a recording medium in which a program to be mounted and activated is stored, to function as:
an activating unit that compares first identification information of a slot into which the recording medium is to be inserted and second identification information of a slot into which the recording medium is actually inserted, and activates the program stored in the recording medium if said activating unit determines that the first identification information and the second identification information match.

47. A computer readable recording medium storing the computer program as claimed in claim 45 or 46.
